# EUROPEAN PATENT APPLICATION

(11) **EP 4 666 852 A2**
(43) Date of publication of application: **24.12.2025**
(21) Application number: 25213912.6
(22) Date of filing: 31.08.2021
(51) Int. Cl.: A01K 79/00

(54) **FISH COUNTING DEVICE AND FISH COUNTING METHOD**

(62) Divisional of application: 21194186.9
(71) Applicant: Furuno Electric Company Limited, Nishinomiya-City, Hyogo 662-8580 (JP)
(72) Inventor: IKEGAMI, Atsushi, Nishinomiya-city, 662-8580 (JP); NAKAMURA, Satoshi, Nishinomiya-city, 662-8580 (JP); IWATA, Kohei, Nishinomiya-city, 662-8580 (JP); SHIBATA, Nobuo, Nishinomiya-city, 662-8580 (JP)
(74) Representative: Cleveland Scott York

(57) **Abstract**

A fish counting device (50) is provided. It comprises an ultrasonic transducer (53) configured to: transmit a transmission wave towards fish, receive a reflection wave, and generate a reception signal from the reflection wave; a beamforming module (106) that generates echo data in a plurality of directions; a fish tracking module (101b) that tracks detected fish based on the echo data acquired from a plurality of transmissions; and a fish counting module (101a) that counts fish based on the echo data and a number of transmissions from the plurality of transmissions for which the detected fish has been tracked The fish counting module is configured to count fish if a fish has been tracked for at least a given number of transmissions that is set according to a distance (La, Lb) between the transducer and the fish, and a width of the transmission wave (Wa, Wb) at said distance.

## Description

The present invention mainly relates to a fish detection device for detecting a fish swimming in the water, a fish cage system equipped with the fish detection device, a fish detection method for detecting a fish swimming in the water, and a program for making a computer execute a function for detecting a fish swimming in water.

Conventionally, different apparatuses are used for detecting one or more fish swimming in water and the biomass (gross weight) of the one or more fish can be calculated based on the detected one or more fish swimming in water. In such apparatuses, for example, a fish in an imaging space is detected from an underwater image captured by a camera. For example, two cameras are placed in the water at a predetermined interval. The one or more fish in the imaging space is counted based on images captured by the two cameras. Patent document 1 discloses such a device.

As used herein, the patent document 1 may be WO2018/061927.

However, in the patent document 1, when a plurality of fish are overlapping in the imaging direction of the camera, the fish on the back side is hidden by the fish on the front side and is not imaged by the camera. That is, the back of the nearest fish is an occlusion region which is not imaged by the camera. Therefore, fish contained in the imaging space cannot be counted with high accuracy. As a result, the calculation accuracy of the biomass of the fish also decreases.

In view of the above problems, it is an object of the present invention to provide a fish detection device, a fish cage system, a fish detection method, and a program capable of accurately calculating the biomass of the fish.

A first aspect of the invention relates to a fish detection device. The fish detection device includes an underwater camera system, a fish size calculating module, a first ultrasonic transducer, a fish counting module, and a fish biomass calculating module. The underwater camera system is configured to acquire an image of one or more fish swimming underwater. The fish size calculating module is configured to detect the one or more fish in the image and to calculate a fish size of each fish of the detected one or more fish based on the image comprising the detected one or more fish. The first ultrasonic transducer is configured to transmit a first transmission wave towards the one or more fish, receive a reflection wave of the first transmission wave reflected from the one or more fish, and generate a first reception signal from the received reflection wave. The fish counting module is configured to count fish as a fish count value based on the first reception signal. The fish biomass calculating module is configured to calculate a fish biomass based on fish sizes of the detected one or more fish and the fish count value.

According to the fish detection device, since the one or more fish are detected and counted based on the first reception signal from the transducer, not only a fish, not included in the occlusion region of the detected one or more fish but also a fish included in the occlusion region of the detected one or more fish can be detected and counted. Therefore, the counting accuracy of the fish can be improved. Since the fish sizes of detected one or more fish is calculated from the image acquired by the underwater camera system, the size of each fish can be accurately calculated with a simple configuration. Since the biomass of the fish is calculated based on the calculated fish sizes of the detected one or more fish and the counting result of the detected one or more fish, the biomass of the fish can be accurately calculated.

In an embodiment of the fish detection device, the first ultrasonic transducer may comprise a plurality of reception transducer elements arranged in a plurality of channels. Each channel may receive the reflection wave and generate the first reception signal. The fish detection device may further include a first beamforming module configured to generate first echo data in a plurality of directions by performing beamforming based on first reception signals generated respectively by the plurality of channels. The fish counting module may count the fish based on the first echo data.

According to this configuration, the one or more fish can be detected in the direction of each reception beam formed by beamforming. Therefore, the one or more fish can be accurately detected and counted in the detection region where the first transmission wave is transmitted.

The fish detection device according to the present embodiment may further include a first fish tracking module configured to track the detected one or more fish based on the first echo data acquired from a plurality of transmissions. The fish counting module may count fish based on a number of transmissions from the plurality of transmissions for which the detected one or more fish has been tracked.

In this configuration, the fish counting module may count fish if a fish of the tracked one or more fish has been tracked for at least a given number of transmissions from the plurality of transmissions. The given number of transmissions may be set according to a fish speed, and the fish speed may be estimated based on a fish length.

According to this configuration, since fish are counted based on the number of transmissions for which the detected one or more fish are tracked, the fish can be counted with high accuracy. Since the number of transmissions referred to is set based on the speed of the fish estimated from the length of the fish, the tracked fish of the target fish species can be counted with high accuracy.

In an embodiment of the fish detection device, the fish detection device may further include a swimming direction calculating module configured to calculate a swimming direction of the tracked one or more fish. The fish counting module may be configured to increase or decrease the fish count value based on the swimming direction of the tracked one or more fish.

For example, the fish counting module may increase the fish count value when the swimming direction of the tracked one or more fish is within a first given range of directions and decrease the fish count value when the swimming direction of the tracked one or more fish is within a second given range of directions, different from the first given range of directions.

According to this arrangement, for example, if at least one fish that swam in the first direction reversed and then swam in the second direction, the increase in the fish count value that occurred when the fish was tracked as swimming in the first range of directions is canceled on tracking the fish as swimming in the second range of directions. As a result, this fish does not get counted. Therefore, the fish remaining after moving in the first direction can be accurately counted.

In an embodiment of the fish detection device, the plurality of directions in which the first echo data is generated by the first beamforming module may be distributed three dimensionally.

According to this configuration, a behavior of fish in the three-dimensional space can be detected from the first echo data.

In an embodiment of the fish detection device, the fish detection device may further include a second ultrasonic transducer and a second beamforming module. The second ultrasonic transducer, separate from the first ultrasonic transducer, may be configured to transmit a second transmission wave towards the one or more fish. The second ultrasonic transducer may comprise a second plurality of reception transducer elements arranged in a second plurality of channels. The second ultrasonic transducer may be configured to receive a corresponding reflection wave of the second transmission wave reflected from the one or more fish and to generate a second reception signal from each of the plurality of channels. The second beamforming module may be configured to generate second echo data in a second plurality of directions by performing beamforming based on second reception signals generated by the second plurality of channels. The plurality of directions in which the first echo data is generated by the first beamforming module may be distributed within a first plane. The second plurality of directions in which the second echo data is generated by the second beamforming module may be distributed within a second plane. The fish detection device may further include a second fish tracking module configured to perform: a first fish detection of the one or more fish in the first plane based on the first echo data, a second fish detection of the one or more fish in the second plane based on the second echo data, and a fish tracking of the one or more fish based on the first fish detection and the second fish detection. The fish counting module may count fish based on the fish tracking.

According to this configuration, a movement of the one or more fish between the first plane and the second plane can be tracked, and a moving direction of the one or more fish can be determined based on the tracking. Thus, the counting of fish can be increased or decreased based on the moving direction of the one or more fish, and the fish remaining after moving in the first direction can be accurately counted.

In the fish detection device, the plurality of directions in which the first echo data is generated by the first beamforming module may be distributed within a plane.

According to this configuration, it is possible to detect that the one or more fish has passed through the plane and to detect the position where the one or more fish has passed based on the echo data. Thus, fish can be counted smoothly.

The fish detection device may further include a trained processing module configured to output a fish species of the one or more fish detected by the fish size calculating module when inputted with the image comprising the detected one or more fish. The fish size calculating module may calculate a ratio of a target fish species in the one or more fish detected from the image. The fish counting module may adjust the fish count value based on the ratio.

According to this configuration, by applying the ratio to the fish count value of the one or more fish by the fish counting module, it is possible to obtain a fish count value of a target fish species in which influence of fish of other fish species similar in size to a target fish species is suppressed. Thus, the biomass can be calculated with higher accuracy using the fish count value of the target fish species, and the biomass with higher accuracy can be obtained.

Alternatively, the fish detection device may further include a trained processing module configured to output a fish species of the one or more fish detected by the fish size calculating module when inputted with the image comprising the detected one or more fish. The fish size calculating module may count a number of fish of a target fish species among the one or more fish detected from the image. The fish counting module may adjust the fish count value based on the number of fish of the target fish species.

According to this configuration, even when the trained processing module can only identify the target fish species, the counted value of the target fish species can be obtained from the images, and the ratio of the target fish species can be calculated from that counted value of the target fish species and the counted value of the fish detected from the images regardless of the fish species. Therefore, by applying this ratio to the fish count value of the fish by the fish counting module, the accuracy of the fish count value of the target fish species can be enhanced similarly as above, and the biomass with higher accuracy can be obtained.

In the fish detection device, the fish size calculating module may calculate a distribution of fish sizes of a target fish species. The fish biomass calculating module may calculate the fish biomass of the target fish species based on the distribution of the fish sizes of the target fish spcies.

According to this configuration, the user can confirm the biomass of a desired fish size.

Alternatively, the fish size calculating module may calculate an average of the fish sizes. The fish biomass calculating module may calculate the fish biomass based on the average of the fish sizes.

According to this configuration, the user can confirm the total biomass of the detected fish.

In an exemplary fish detection device, the underwater camera system may include at least one camera.

For example, the underwater camera system may include a stereo camera.

It is preferable that lens of the underwater camera system and the first ultrasonic transducer face substantially in a same direction.

Thus, substantially the same position can be detected by the underwater camera system and the underwater ultrasonic system (comprising the first ultrasonic transducer). Therefore, the detection of the one or more fish by the image from the underwater camera system and the detection of the one or more fish by the first reception signal from the underwater ultrasonic system can be easily synchronized.

In this case, the same direction is, for example, the horizontal direction.

A second aspect of the invention relates to a fish cage system. The fish cage system includes the fish detection device according to the first aspect of the invention and a path connecting a first fish cage and a second fish cage, wherein the one or more fish migrate in the path from the first fish cage to the second fish cage. The fish detection device calculates the fish biomass of the one or more fish migrating in the path.

According to the fish cage system, the biomass of the one or more fish that moved from the first fish cage to the second fish cage can be accurately calculated.

A third aspect of the present invention relates to a fish detection method. The fish detection method includes acquiring an image of one or more fish swimming underwater; detecting the one or more fish in the image; calculating a fish size of each fish of the detected one or more fish based on the image comprising the detected one or more fish; transmitting a first transmission wave towards the one or more fish; receiving a reflection wave of the first transmission wave reflected from the one or more fish; generating a first reception signal based on the reflection wave; counting fish as a fish count value based on the first reception signal; and calculating fish biomass of the detected one or more fish based on fish sizes of the detected one or more fish and the fish count value.

According to the fish detection method according to this embodiment, the same effect as that of the fish detection device according to the first aspect of the invention can be obtained.

A fourth aspect of the present invention relates to a non-transitory computer-readable medium having stored thereon computer-executable instructions which, when executed by a computer, cause the computer to acquire an image of one or more fish swimming underwater; detect the one or more fish in the image; calculate a fish size of each fish of the detected one or more fish based on the image comprising the detected one or more fish; transmit a first transmission wave towards the one or more fish; receive a reflection wave of the first transmission wave reflected from the one or more fish; generate a first reception signal based on the reflection wave; count fish as a fish count value based on the first reception signal; and calculate fish biomass based on fish sizes of the detected one or more fish and the fish count value.

According to the program according to this embodiment, the same effect as that of the fish detection device according to the first aspect of the invention can be obtained.

As described above, according to the present invention, it is possible to provide a fish detection device, a fish cage system, a fish detection method, and a program capable of accurately calculating the biomass of fish.

The effect or significance of the present invention will be further clarified by the description of the following embodiments. However, the embodiments shown below are only examplary embodiments of the present invention, and the present invention is not limited to the embodiments described below.
FIG. 1 is a plan view illustrating a configuration of a fish cage system, according to an embodiment;
FIG. 2 is a side view illustrating a configuration of a fish cage system, according to an embodiment;
FIG. 3 is a cross-sectional view illustrating a configuration of a fish cage system of FIG. 1, according to an embodiment;
FIG. 4(a) is a diagram illustrating a configuration of a sensor unit of a detection unit, according to an embodiment;
FIG. 4(b) is a diagram illustrating configurations of a transmission transducer element and a reception transducer element disposed in a transducer, according to an embodiment;
FIG. 5(a) is a partial top view schematically illustrating a transmission state of a first transmission wave, according to an embodiment;
FIG. 5(b) is a partial side view schematically illustrating a scanning state of a reception beam, according to an embodiment;
FIG. 6 is a block diagram illustrating a configuration of a fish detection device, according to an embodiment;
FIG. 7 is a flowchart illustrating a method for detecting and counting fish passing through a detection region of a transducer, according to an embodiment;
FIG. 8 is a diagram schematically illustrating an image acquired by an underwater camera system, according to an embodiment;
FIG. 9(a) is a flowchart illustrating a fish counting method, according to an embodiment;
FIG. 9(b) is a diagram schematically illustrating an example of a distribution region, according to an embodiment;
FIG. 9(c) is a diagram schematically illustrating an example of a peak position, according to an embodiment;
FIG. 10(a) is a flowchart illustrating a passage determination method, according to an embodiment;
FIGS. 10(b) and 10(c) are time charts schematically illustrating echo intensity of a tracked fish at each ping, according to an embodiment;
FIG. 11 is a diagram illustrating a method for estimating a number of pings required to pass, according to an embodiment;
FIG. 12(a) is a flowchart illustrating a biomass calculation method, according to an embodiment;
FIG. 12(b) is a flowchart illustrating another biomass calculation method, according to an embodiment;
FIG. 13(a) is a diagram illustrating a configuration of a sensor unit of a detection unit, according to an embodiment;
FIG. 13(b) is a diagram illustrating a configuration of a transducer element disposed in a transducer, according to an embodiment;
FIG. 14(a) is a partial top view schematically illustrating transmission states of the first transmission wave and a second transmission wave, according to an embodiment;
FIG. 14(b) is a partial side view schematically illustrating a scanning state of a reception beam, according to an embodiment;
FIG. 15 is a block diagram illustrating a configuration of a fish detection device, according to an embodiment;
FIG. 16 is a diagram illustrating a method of tracking a fish by a second fish tracking module, and a method of calculating a swimming direction of a fish by a swimming direction calculating module, according to an embodiment;
FIG. 17 is a flowchart illustrating a fish counting method, according to an embodiment;
FIG. 18(a) is a diagram illustrating a configuration of a sensor unit of a detection unit, according to an embodiment;
FIG. 18(b) is a diagram illustrating a configuration of a transducer element disposed in a transducer, according to an embodiment;
FIG. 19 is a block diagram illustrating a configuration of a fish detection device, according to an embodiment; and
FIG. 20 is a diagram schematically illustrating an example of a fish counting method, according to an embodiment.

### <First Embodiment>

Embodiments of the present invention will be described below with reference to the drawings. For convenience, the drawings are appropriately marked with mutually orthogonal XYZ axes. The X-axis direction and the Y-axis direction are horizontal, and the Z-axis direction is vertical. The positive X-axis direction is a direction in which a first fish cage and a second fish cage line up, that is, a direction in which a fish moves from the first fish cage to the second fish cage.

In the following embodiments, the invention is applied to a fish cage system, where fish carried in a carrier ship are transferred to a fish cage. However, the present invention is not limited in any way to the following embodiments.

### <Fish cage system >

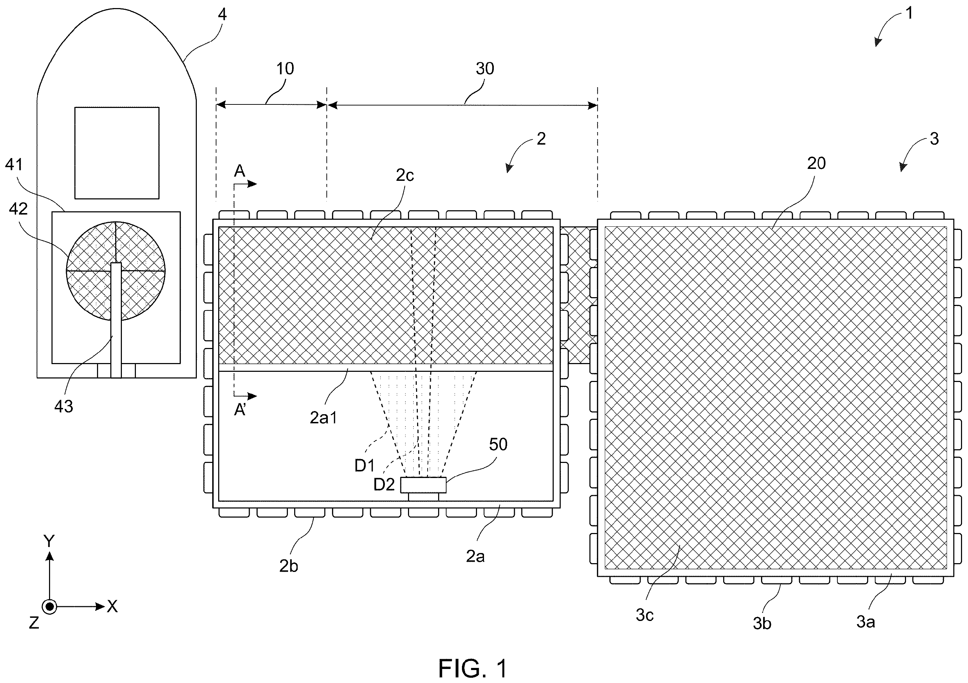

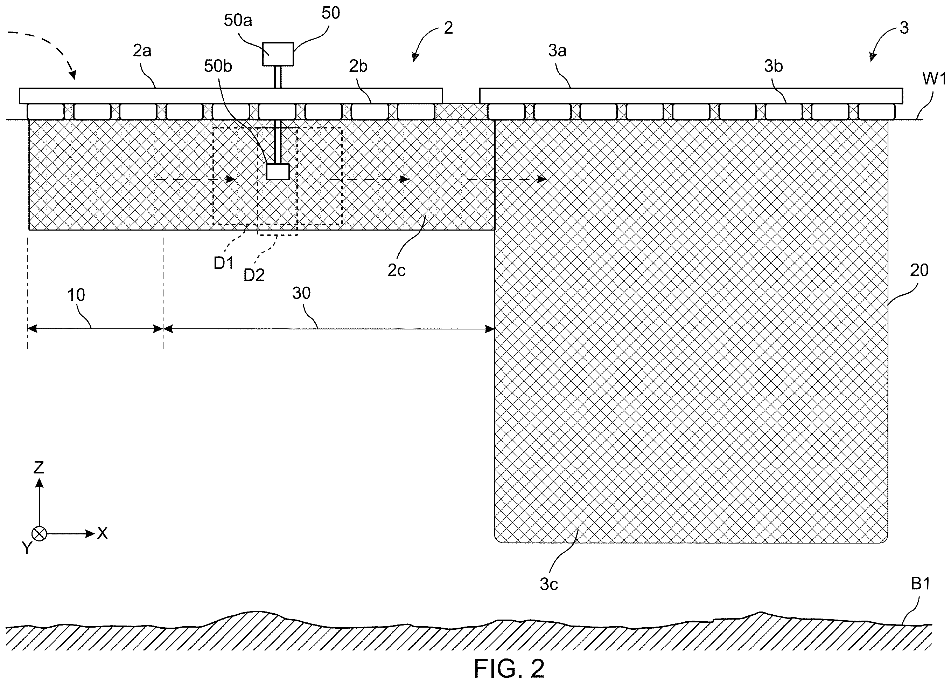

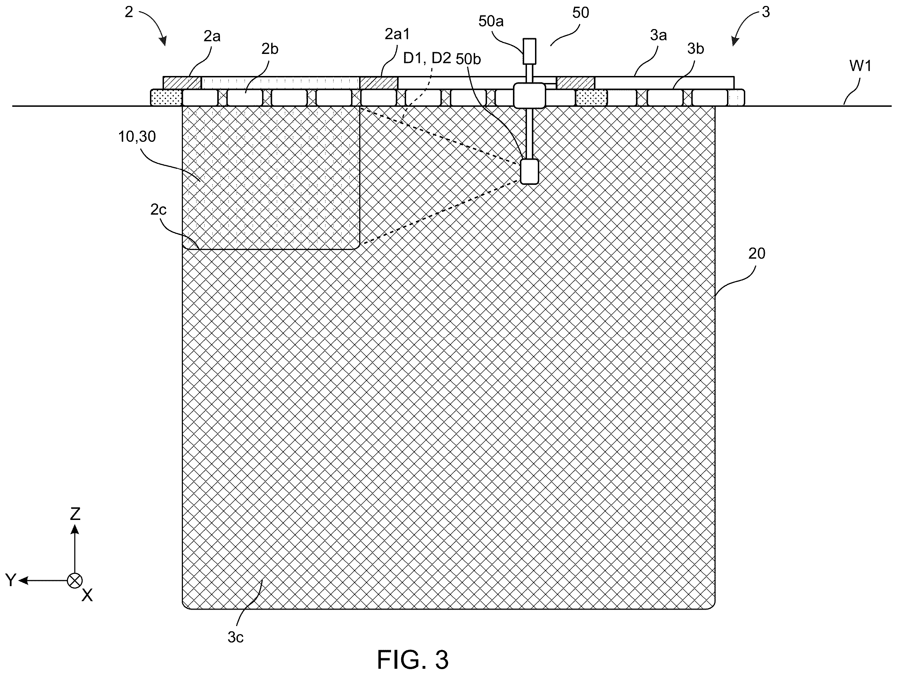

FIGS. 1 and 2 are a plan view and a side view respectively, illustrating a configuration of a fish cage system 1. FIG. 3 is a cross-sectional view illustrating a configuration of the fish cage system 1 of FIG. 1 taken at the position A-A'.

Referring to FIGS. 1-3, the fish cage system 1 includes two rafts 2, 3 installed at sea. The rafts 2 and 3 are secured to the bottom B1 by a rope or the like (not shown) so as to restrict horizontal movement. The rafts 2 and 3 are connected to each other by a rope or the like (not shown). The rafts 2, 3 are arranged in the X-axis direction so that one side faces the other with a predetermined gap.

The raft 2 is provided with a raft frame 2a made of any of wood, a metal pipe, or the like. The raft 2 inlcudes a plurality of floats 2b for floating the raft frame 2a on the sea, and a net 2c for accommodating and guiding fish. The raft frame 2a has a substantially rectangular shape in plan view. The plurality of floats 2b is installed on the lower surface of the raft frame 2a along the outer periphery of the raft frame 2a. The raft frame 2a floats on sea surface W1 by the buoyancy of the floats 2b.

The raft frame 2a has a beam part 2a1 connecting a pair of opposite sides at a substantially central position. The region inside the raft frame 2a is divided into two regions in the Y-axis direction by the beam part 2a1. The net 2c is disposed in the region on the positive side of the Y-axis. As shown in FIG. 3, the net 2c hangs in a rectangular shape to a predetermined depth. The upper end of the net 2c extends to the height of the upper surface of the raft frame 2a.

FIG. 3 further illustrates, the net 2c has two side surfaces facing in the Y-axis direction, a bottom surface connecting the lower ends of the two side surfaces, and a side surface connecting the two side surfaces and the end part on the X-axis negative side of the bottom surface. The upper surface and the side surface on the X-axis positive side of the region surrounding the net 2c are opened. An end part on the positive side of the X-axis of the net 2c is connected to a net 3c on the side of the raft 3. That is, the net 3c has a rectangular opening formed on a side surface on the negative side of the X-axis. The end portion of the net 2c on the positive side of the X-axis is connected to the outer peripheral portion of the opening. Thus, the region surrounded by the net 2c communicates with the region surrounded by the net 3c through the opening.

The raft 3 is provided with a raft frame 3a made of wood, a metal pipe, or the like, a plurality of floats 3b for floating the raft frame 3a on the sea, and the net 3c for accommodating fish. The raft frame 3a has a substantially rectangular shape in plan view. The plurality of floats 3b is installed on the lower surface of the raft frame 3a along the outer periphery of the raft frame 3a. The raft frame 3a floats on the sea surface W1 by the buoyancy of the floats 3b.

Net 3c is installed in a region inside the raft frame 3a. As shown in FIG. 3, the net 3c hangs in a rectangular shape to a predetermined depth. The upper end of the net 3c extends to the height of the upper surface of the raft frame 3a. The net 3c includes two side surfaces facing in the X-axis direction, two side surfaces facing in the Y-axis direction, and a bottom surface, all connected to each other. The region surrounded by the net 3c has an open top. As described above, an opening connected to the net 2c is formed in the side surface of the net 3c on the negative side of the X-axis. As shown in FIG. 2, the net 3c of the raft 3 hangs down in the vicinity of the bottom B1. The bottom surface of the net 2c is positioned higher than the bottom surface of the net 3c.

Returning to FIG. 1, in the fish cage system 1 having the above configuration, a first fish cage 10 is constituted by a region on the X-axis negative side within the region surrounded by the net 2c, and a second fish cage 20 is constituted by the region surrounded by the net 3c. A path 30 for connecting the first fish cage 10 and the second fish cage 20 is constituted by a region on the positive X-axis side within the region surrounded by the net 2c. One or more fish caught by fishing and the like are transferred to the first fish cage 10. The one or more fish transferred to the first fish cage 10 travel through the path 30 to the second fish cage 20. The one or more fish migrated to the second fish cage 20 are cultured in the second fish cage 20. The fish to be cultured is, for example, small tuna (Yokowa).

In this case, as shown in FIG. 1, a carrier ship 4 is laterally attached to the negative X-axis side of the raft 2. A fish cage 41 on the carrier ship 4 stores, for example, the one or more fish caught by fishing. The one or more fish housed in the inboard fish cage 41 are transferred from the inboard fish cage 41 to the first fish cage 10 by a net 42 and a crane 43. The one or more fish transferred to the first fish cage 10 travel through the path 30 to the second fish cage 20. This operation is repeated to successively transfer the one or more fish in the inboard fish cage 41 to the second fish cage 20.

In order to determine whether too many fish are accommodated in the first fish cage 10 and the second fish cage 20, a user of the fish cage system 1 may, from time to time, keep track of the number and biomass (gross weight) of the one or more fish transferred from the inboard fish cage 41 to the first fish cage 10 and the second fish cage 20. In addition, after completing the transfer of the one or more fish from inboard fish cage 41 to first fish cage 10 and second fish cage 20, the user of the fish cage system 1 may report to the authorities the number and biomass (gross weight) of new one or more fish transferred to the first fish cage 10 and the second fish cage 20.

For this reason, the fish cage system 1 is further provided with a fish detection device 50 for measuring the number and biomass (gross weight) of the one or more fish transferred to the first fish cage 10 and the second fish cage 20. The details of the fish detection device are illustrated in FIG. 2. Fish detection device 50 includes a control processing unit 50a and a detection unit 50b. The control processing unit 50a and the detection unit 50b are installed on the side of the raft frame 2a on the negative side of the Y-axis. Control processing unit 50a is positioned above sea level W1. The detection unit 50b is arranged in water so that a fish moving along the path 30 can be detected through the side surface of the net 2c on the negative side of the Y-axis. The detection direction of the detection unit 50b is set to the positive Y-axis direction.

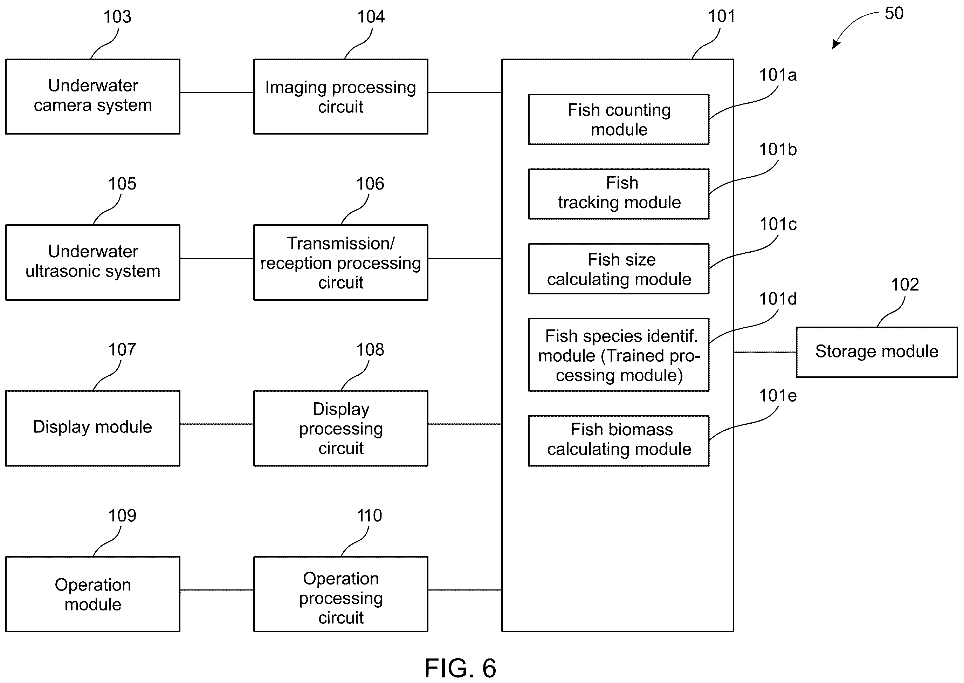

The detection unit 50b includes an underwater camera system 103 and an underwater ultrasonic system 105 (which will be described in detail later in FIG. 6). The underwater camera system 103 images a detection region D1. The underwater ultrasonic system 105 transmits ultrasonic waves to a detection region D2 having a narrower range in the X-axis direction than the detection region D1, receives the reflected waves, and acquires echo data. The detection regions D1 and D2 include substantially the entire range in the height direction of the path 30.

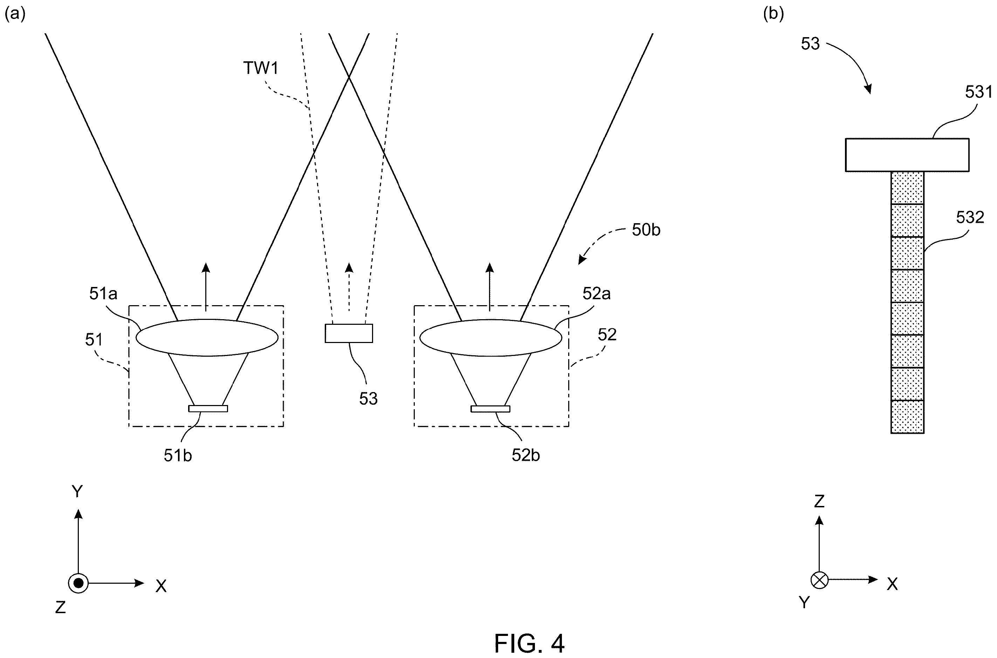

FIG. 4(a) is a diagram illustrating a configuration of a sensor unit of the detection unit 50b, according to an embodiment.

The detection unit 50b includes two cameras 51, 52, and a transducer 53 (also referred to as a first ultrasonic transducer). The two cameras 51, 52 are included in the underwater camera system 103 and the transducer 53 is included in the underwater ultrasonic system 105. The two cameras 51 and 52 are arranged side by side in the X-axis direction at a predetermined interval. That is, the two cameras 51 and 52 constitute a stereo camera. The two cameras 51 and 52 have parallax corresponding to the positional deviation in the X-axis direction. By this parallax, the distance to the same object included in each captured image of the two cameras 51 and 52 can be calculated.

The cameras 51 and 52 are respectively provided with lenses 51a and 52a having a predetermined viewing angle, and image sensors 51b and 52b for forming an image of an imaged region by the lenses 51a and 52a. Each of the lenses 51a and 52a need not necessarily be constituted by one lens but may be constituted by combining a plurality of lenses. The image sensors 51b and 52b are color image sensors such as CMOS image sensors and CCD.

The transducer 53 is arranged between the two cameras 51 and 52. The transducer 53 need not necessarily be disposed between the two cameras 51, 52, but may be disposed around the cameras 51, 52, such as laterally on one camera. The transducer 53 includes a transmission transducer element (ultrasonic transducer) that transmits an ultrasonic wave (also referred to as a first transmission wave), and a reception transducer element (ultrasonic transducer) that receives the reflected wave. The transmission transducer element and the reception transducer element may be constituted of a common transducer element. The reception transducer element is arranged in a plurality of channels.

FIG. 4(b) is a diagram illustrating configurations of the transmission transducer element and the reception transducer element disposed in the transducer 53, according to an embodiment.

The transducer 53 has one transmission transducer element 531 and a plurality of reception transducer elements 532 arranged in a plurality of channels. That is, the transducer 53 has a transmission transducer element 531 that is arranged in the X-axis direction and a plurality of reception transducer elements 532 that are linearly arranged in the Z-axis direction. The center of the transmission transducer element 531 and the centers of the plurality of reception transducer elements 532 are linearly arranged in the Z-axis direction. The transmission transducer element 531 and the plurality of reception transducer elements 532 are ultrasonic transducers. The number of transmission transducer elements 531 and the plurality of reception transducer elements 532 disposed in the transducer 53 is not limited to the number shown in FIG. 4(b).

Returning to FIG. 4(a), the lenses 51a and 52a and the transducer 53 face substantially the same direction. More specifically, the direction in which the lenses 51a, 52a and the transducer 53 are directed is a horizontal direction. That is, as shown in FIG. 2, the lenses 51a and 52a and the transducer 53 are oriented in a direction substantially perpendicular to the side surface of the net 2c constituting the path 30 on the negative side of the Y-axis. The lenses 51a and 52a and the transducer 53 are disposed substantially at the center in the height direction of the net 2c. Thus, the detection region D1 can be imaged smoothly by the cameras 51 and 52, and the transmission and reception of ultrasonic waves to and from the detection region D2 can be performed smoothly by the transducer 53.

The direction in which the lenses 51a, 52a and the transducer 53 are oriented may not necessarily be horizontal. For example, the lenses 51a, 52a and the transducer 53 may be oriented downward from the horizontal direction. In this case, the lenses 51a, 52a and the transducer 53 may be disposed above the vertical center of the net 2c such that the detection regions D1, D2 cover the net 2c of the path 30.

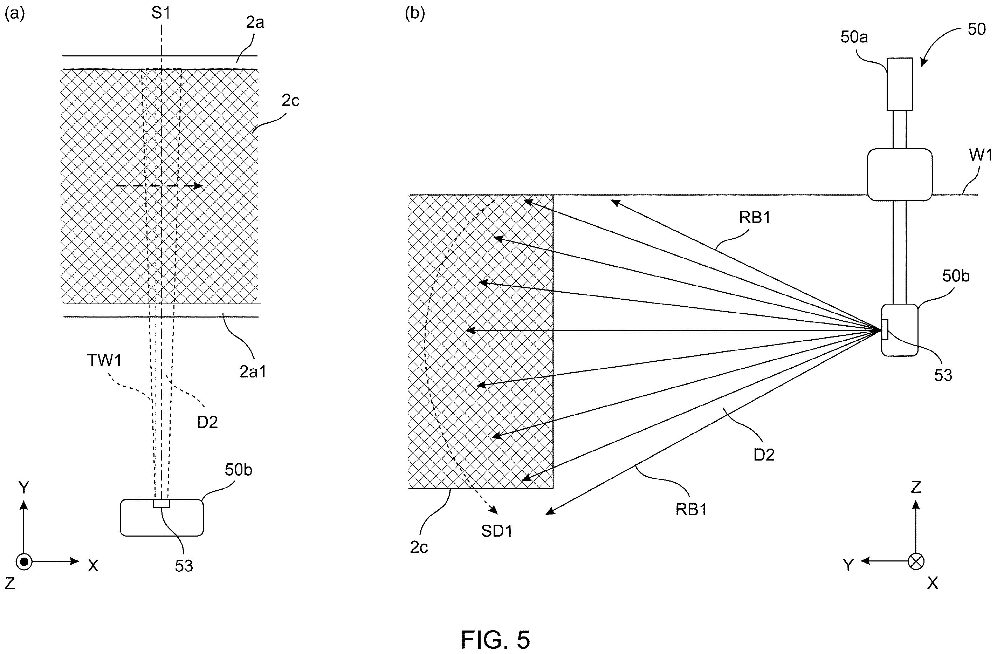

FIG. 5(a) is a partial top view schematically illustrating a transmission state of a first transmission wave TW1, according to an embodiment. FIG. 5(b) is a partial side view schematically illustrating a scanning state of a reception beam RB1, according to an embodiment.

As shown by a broken line in FIG. 5(a), the first transmission wave TW1 having a narrow beam width in the X-axis direction and a wide beam width in the Y-Z plane is transmitted from the transmission transducer element 531 shown in FIG. 4(b). Further, as shown in FIG. 5(b), beamforming is performed from first reception signals outputted from the plurality of reception transducer elements 532 shown in FIG. 4(b), thus generating a plurality of reception beams RB1 having mutually different angles in the elevation angle direction.

The plurality of reception beams RB1 are directed in an elevation angle direction with a predetermined resolution, from a center of a row formed by the plurality of reception transducer elements 532 shown in FIG. 4(b). Each direction of the reception beams RB1 is within a first plane S1 parallel to the Y-Z plane. The first plane S1 extends along a straight line connecting the centers of the plurality of reception transducer elements 532, parallel to the Y-Z plane. As shown in FIG. 5(a), the first plane S1 passes through the middle of the width of the first transmission wave TW1 in the X-axis direction. The first plane S1 is scanned in a scanning direction SD1 along the elevation angle direction by the plurality of reception beams RB1. Thus, a target in the direction of each reception beam RB1 is detected.

The region to which the transmission wave (such as the first transmission wave TW1) is transmitted, that is, the region having a narrow width in the X-axis direction and a wide width in the Y-Z plane, shown by the broken line in FIG. 5(a) constitutes the detection region D2 shown in FIG. 1.

### <Fish detection device>

FIG. 6 is a block diagram illustrating a configuration of the fish detection device 50, according to an embodiment.

The fish detection device 50 includes a control module 101, a storage module 102, the underwater camera system 103, an imaging processing circuit 104, the underwater ultrasonic system 105, a transmission/reception processing circuit 106, a display module 107, a display processing circuit 108, an operation module 109, and an operation processing circuit 110. The configuration of FIG. 6 is arranged in the control processing unit 50a except for the configuration of the sensor unit shown in FIG. 4(a).

The control module 101 includes an arithmetic processing circuit such as a CPU (Central Processing Unit) and executes control processing for fish detection by a program stored in the storage module 102. The storage module 102 includes a storage medium such as a ROM (Read Only Memory), a RAM (Random Access Memory), and a hard disk. A program for realizing the processing of fish detection is stored in the storage module 102.

The underwater camera system 103 includes the cameras 51 and 52 (stereo camera system) shown in FIG. 4(a). The imaging processing circuit 104 drives image sensors 51b, 52b of the cameras 51, 52 in accordance with control from the control module 101 to acquire an image of an imaging region (detection region D1). The imaging processing circuit 104 outputs the acquired image to the control module 101.

The underwater ultrasonic system 105 includes the transducer 53 shown in FIG. 4(a). In response to receiving a control signal from the control module 101, the transmission/reception processing circuit 106 outputs a first transmission signal for transmitting the ultrasonic wave (i.e., the first transmission wave) through the transducer 53. The transmission/reception processing circuit 106 generates first echo data by processing a first reception signal outputted by receiving a reflection wave of the ultrasonic wave transmitted thereto by the transducer 53, and outputs the generated first echo data to the control module 101.

More specifically, during transmission, the transmission/reception processing circuit 106 drives the transmission transducer element 531 shown in FIG. 4(b) to transmit ultrasonic waves (i.e., the first transmission wave). Thus, the ultrasonic waves are transmitted to the detection region D2. During reception, the transmission/reception processing circuit 106 processes the first reception signals outputted by all the reception transducer elements 532 shown in FIG. 4(b). The transmission/reception processing circuit 106 performs beamforming from the first reception signal outputted from each reception transducer element 532 to form the plurality of reception beams RB1 distributed in the elevation angle direction as shown in FIG. 5(b), and generates the first echo data in the direction of each reception beam RB1. Thus, the transmission/reception processing circuit 106 generates the first echo data distributed in the elevation angle direction in the detection region D2, and outputs the generated first echo data to the control module 101.

As described above, the transmission/reception processing circuit 106 comprises a function of a first beamforming module that generates the first echo data in a plurality of directions (directions of the reception beams RB1) by performing beamforming based on a plurality of first reception signals generated respectively by a plurality of channels (the plurality of reception transducer elements 532).

The display module 107 is provided with a display device such as a liquid crystal display. The display processing circuit 108 causes a predetermined image to be displayed on the display module 107 in response to a display control signal received from the control module 101. The operation module 109 includes input means such as an operation key and a mouse. The operation processing circuit 110 outputs an output signal to the control module 101 in response to the operation of operation module 109 in response to an operation control signal from the control module 101. The display module 107 and the operation module 109 may be constituted of a liquid crystal panel in which a touch panel is superposed on a liquid crystal display.

In the present embodiment, the program stored in storage module 102 provides a fish counting module 101a, a fish tracking module 101b (also referred to as a "first fish tracking module"), a fish size calculating module 101c, a fish species identification module 101d, and a fish biomass calculating module 101e, wherein each of the modules is configured to perform different functions associated with the control module 101.

The fish counting module 101a detects and counts the fish (as a fish count value) that have passed the detection region D2 based on the first reception signals outputted from the plurality of reception transducer elements 532 disposed in the transducer 53. More specifically, the fish counting module 101a detects entry and exit of each of the one or more fish from the detection region D2 based on the first echo data in the direction of each reception beam RB1 inputted from the transmission/reception processing circuit 106, and counts the fish that have passed the detection region D2 based on the detection result.

The fish tracking module 101b tracks fish across the detection region D2 based on the first echo data acquired from a plurality of transmissions from the transmission transducer element 531 of the transducer 53. Hereinafter, one transmission and the corresponding processing of the reception signals is referred to as "ping ". The fish tracking module 101b tracks the one or more fish across the detection region D2 based on the first echo data acquired from a plurality of consecutive pings.

The fish size calculating module 101c detects the one or more fish in the image acquired by the underwater camera system 103, and calculates size of the detected one or more fish based on the image with the detected one or more fish. The fish size calculating module 101c calculates fork length (i.e., length of the fish) and height of the detected one or more fish in the image, and from this calculation result further calculates body weight (estimated value) of each fish of the detected one or more fish. The fork length and height may be calculated based on a region of each fish of the one or more fish in the image and a distance to each fish calculated by the parallax of the cameras 51, 52 (stereo camera system). The fish species may be included in the calculation of the body weight (estimated value).

The fish species identification module 101d identifies fish species of the detected one or more fish included in the image based on the image including the one or more fish detected by the fish size calculating module 101c. More specifically, the fish species identification module 101d includes a trained processing module that outputs a fish species of the fish when inputted with an image including the fish detected by the fish size calculating module 101c. The trained processing module (101d) is trained beforehand with images of a fish of a predetermined fish species. The training is based on Artificial Intelligence (AI) techniques known in the art.

The fish biomass calculating module 101e calculates the fish biomass (gross weight) based on the fish count value outputted by the fish counting module 101a and the fish size calculated by the fish size calculating module 101c. For example, the fish biomass calculating module 101e calculates the biomass of the target fish species as set by operation module 109. The calculated biomass, together with the fish species and the fish count value, are presented in the display module 107.

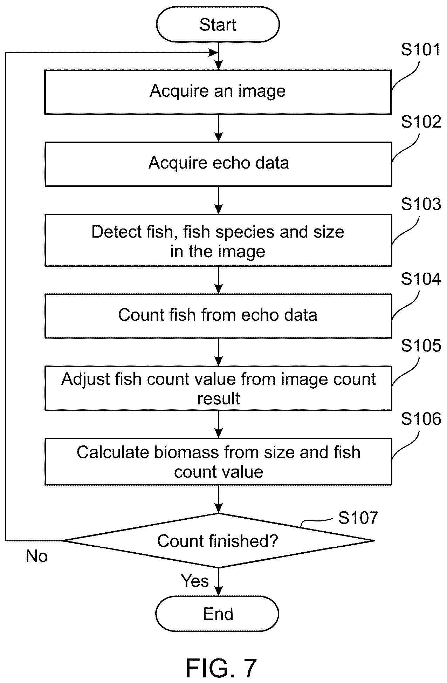

FIG. 7 is a flowchart illustrating a method for detecting and counting fish passing through the detection region D2, according to an embodiment.

The processing of FIG. 7 is executed by the control module 101 from the above functions assigned to the control module 101 by the above program stored in the storage module 102.

At step S101, the control module 101 acquires an image from the underwater camera system 103 (Cameras 51, 52). At step S102, the control module 101 acquires echo data from the underwater ultrasonic system 105 in a fixed cycle. Next, at step S103, the control module 101 analyzes the acquired image to detect the one or more fish in the image. Further, the control module 101 detects the fish species and size of the fish from the image of the detected one or more fish. Further, at step S103, the control module 101 counts the number of fish that have passed the detection region D1 for each fish species based on images from the underwater camera system 103.

At step S104, the control module 101 detects and counts the fish as the fish count value that have passed the detection region D2 based on the first echo data in the direction of each reception beam RB1. Then, at step S105, the control module 101 adjusts the fish count value acquired at step S104 with the counting result of each fish species acquired at step S103. Specifically, the control module 101 calculates a ratio of a number of a target fish species to a number of all fish species from the count result of each fish species acquired in step S103, and calculates the total number of fish of the target fish species by multiplying the calculated ratio by the fish count value of the fish acquired in step S104.

At step S106, the control module 101 calculates the biomass (gross weight) of the target fish species on the basis of the adjusted fish count value acquired at step S105 and fish sizes of the detected one or more fish acquired at step S103. The control module 101 displays the calculated biomass together with the fish species and total number in display module 107.

Thereafter, the control module 101 determines whether or not the fish counting operation has been completed at step S107. Specifically, the control module 101 determines whether or not the operation module 109 has been operated to terminate the counting operation. If the fish counting operation has not been completed (S107: NO), the control module 101 returns the processing to step S101 and executes the processing in the next cycle (ping). Thus, the calculation result of the biomass is updated every fixed period and displayed on the display module 107. Thereafter, when the counting operation is completed (S107: YES), the control module 101 terminates the processing of the method of FIG. 7.

The processing of different steps of the method shown in FIG. 7 is performed by the functions of the various modules including: the fish size calculating module 101c and the fish species identification module 101d in the control module 101, for example, for step S103; the fish counting module 101a and the fish tracking module 101b for step S104. The processing of step S105 is performed by the function of the fish counting module 101a in the control module 101, and the processing of step S106 is performed by the function of the fish biomass calculating module 101e in the control module 101. In the following description, for convenience, it is assumed that the control module 101 performs the processing of FIG. 7.

Each step of the steps S103 to S106 in FIG. 7 is described in more detail below.

First, the processing of step S103 in FIG. 7 is described.

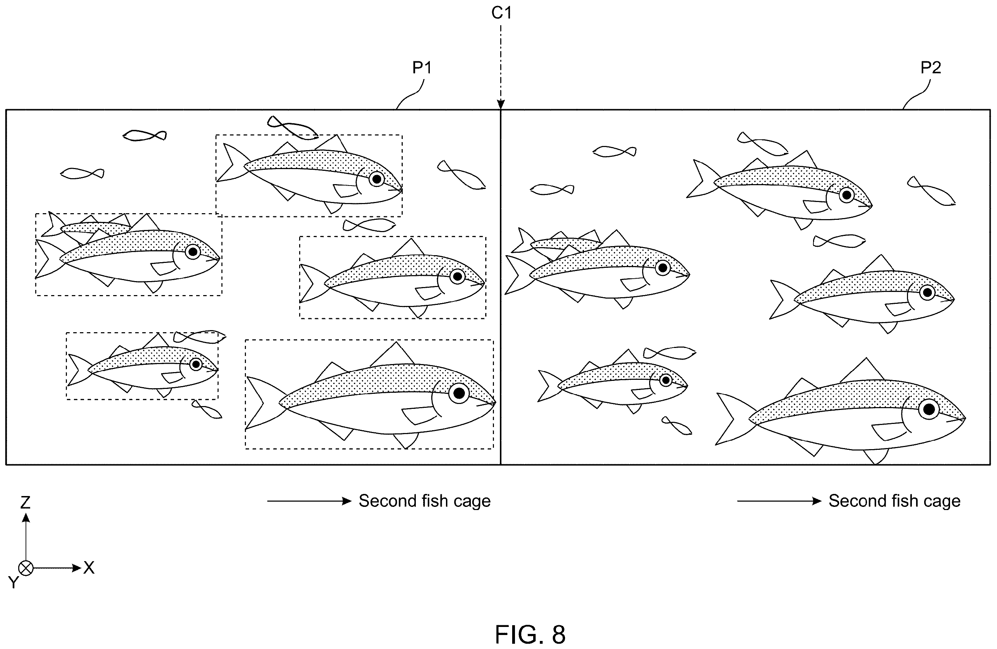

FIG. 8 is a diagram schematically illustrating an image acquired by the underwater camera system 103, according to an embodiment.

As described above, since the underwater camera system 103 includes the two cameras 51 and 52 arranged side by side in the X-axis direction, as shown in FIG. 8, two images P1 and P2 are acquired by the respective cameras 51 and 52. The image P1 is an image acquired by the camera 51, and the image P2 is an image acquired by the camera 52. Since the cameras 51 and 52 pick up images of the same detection region D1, images P1 and P2 contain images of the same fish. However, in the images of the same fish included in the images P1 and P2, positional deviation occurs in accordance with the parallax of the cameras 51 and 52. Based on the positional deviation and the parallax, a distance from the underwater camera system 103 to each fish can be calculated.

In the image P1, the detection result of the target fish species is shown by a broken line frame. Here, the target fish species is small tuna (Yokowa). In step S103 of FIG. 7, the control module 101 identifies the detected fish species by the function of the fish species identification module 101d illustrated in FIG. 6. The control module 101 calculates the size (fork length, height, weight) of the detected fish by the function of the fish size calculating module 101c illustrated in FIG. 6. Similarly, the control module 101 identifies the fish species and calculates the size of the other fish species in the image P1.

In addition, the control module 101 tracks the movement of each fish of the one or more fish by the function of the fish tracking module 101b illustrated in FIG. 6. The control module 101 tracks the detected one or more fish included in the image from the image acquired this time (current image) from the underwater camera system 103 and a series of images acquired previously from the underwater camera system 103, and detects a swimming direction of the one or more fish. The control module 101 performs this processing for each fish of the one or more fish included in the image.

The control module 101 determines whether or not the tracked one or more fish has passed a counting reference position C1 while the swimming direction of the tracked one or more fish is included in a first range of directions toward the second fish cage 20. The first range of directions is a range of directions including a vector component in a direction toward the second fish cage 20 (X-axis positive direction). As illustrated in FIG. 8, for example, the counting reference position C1 is set at a boundary of the image P1 on the positive side of the X-axis. However, the method of setting the counting reference position C1 is not limited thereto, and for example, the counting reference position C1 may be set at a position shifted from the boundary on the positive X-axis side of the image P1 to the negative X-axis side.

Whether or not the one or more fish has passed through the counting reference position C1 is determined by, for example, whether or not a predetermined range on the front side of each fish of the one or more fish has exceeded the counting reference position C1 in a first direction in the image acquired currently. Thus, the control module 101 increments by one the count value of the species of the tracked one or more fish that passed through the counting reference position C1 while swimming in the first range of directions.

As described above, in step S103 of FIG. 7, the control module 101 detects the fish species and size of the one or more fish in the image, and counts the fish that have passed the counting reference position C1 in the direction toward the second fish cage 20 in association with the fish species of the fish.

Next, the processing of step S104 in FIG. 7 is described.

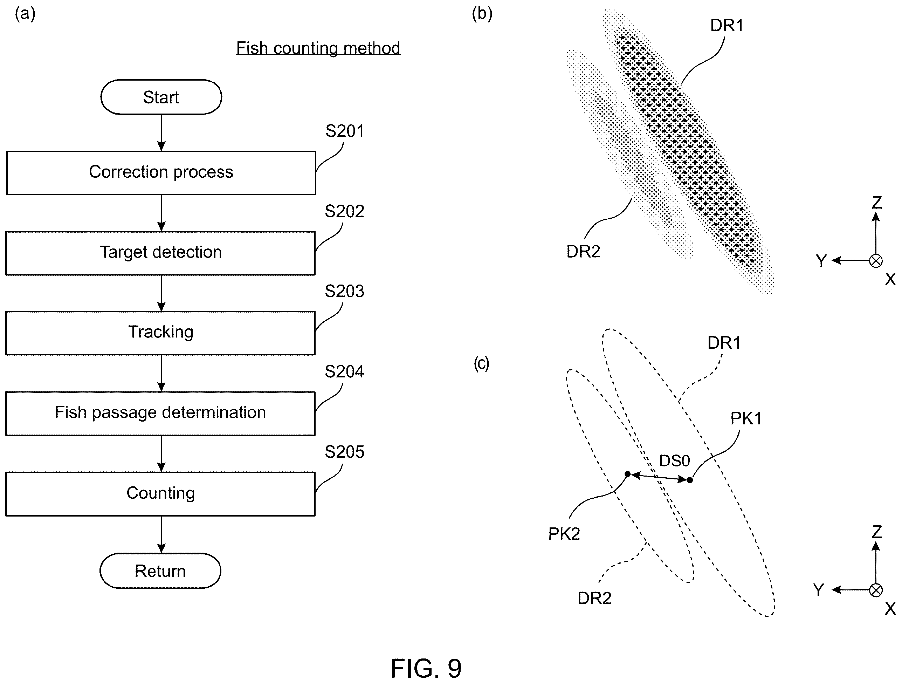

FIG. 9(a) is a flowchart illustrating a fish counting method executed in step S104 of FIG. 7.

The control module 101 performs the method of FIG. 9(a) by the function of the fish counting module 101a illustrated in FIG. 6.

First, at step S201, the control module 101 executes a correction process such as noise removal on the echo data (for example, the first echo data) acquired currently from one ping. The echo data for one ping is configured such that the distance (time from transmission to reception) and the echo intensity are associated for each direction of the reception beams RB1. That is, the echo data for one ping is configured such that the echo intensity is distributed in the scanning cross-section (first plane S1 in FIG. 5(a)) of the reception beams RB1.

The control module 101 applies processing based on so-called auto gain to such echo data to set it in a range of echo intensities generated by targets other than noise, and extracts echo data included in this range of echo intensities as echo data used for target detection. This process is similar to the process of generating an echogram from echo data from a reception beam.

Next, at step S202, the control module 101 detects a target based on the extracted echo data. First, the control module 101 extracts from the extracted echo data a distribution region in which echo intensities higher than a given intensity are clustered together. FIG. 9(b) is a diagram schematically illustrating an example of a distribution region. Two distribution regions DR1 and DR2 are illustrated. Here, the higher the hatch density, the higher the echo intensity.

Next, the control module 101 identifies a peak position of the echo intensity for each distribution region. When a plurality of peak positions exists in one distribution region, the control module 101 calculates a center of gravity position by merging the peak positions as the peak position of the region. FIG. 9(c) is a diagram schematically illustrating an example of a peak position. Here, peak positions PK1 and PK2 of the two distribution regions DR1 and DR2 illustrated in FIG. 9(b) are illustrated.

Then, the control module 101 calculates a distance between adjacent peak positions, and compares the calculated distance with a given threshold value. Here, the threshold value is set to a distance that is a limit at which it is estimated that the fish of the target fish species can approach. FIG. 9(c) illustrates the distance DS0 between the peak positions PK1 and PK2.

If the distance between the peak positions is equal to or greater than the threshold value, the control module 101 estimates that the two adjacent distribution regions are caused by echoes from targets such as fish, and acquires the peak positions of these distribution regions as detection positions of targets. On the other hand, if the distance between the peak positions is less than the threshold value, the control module 101 estimates that the distribution region having the smaller peak intensity is caused by reverberation or the like other than fish. In this case, the control module 101 deletes the peak position having the smaller peak intensity and acquires only the peak position having the larger peak intensity as the detection position of the target such as a fish.

For example, in the example of FIG. 9(c), when the distance DS0 is equal to or greater than the threshold value, both peak positions PK1 and PK2 are acquired as detection positions of targets. On the other hand, when the distance DS0 is smaller than the threshold value, the peak position PK2 having the smaller peak intensity is deleted, and only the peak position PK1 having the larger peak intensity is acquired as the detection position of the target.

Thus, in each ping process, the control module 101 maps the detection position of targets onto the scanning cross-section (first plane S1) of the reception beams RB1.

Next, at step S203, the control module 101 performs processing for tracking the detected target. This processing is performed by the function of the fish tracking module 101b illustrated in FIG. 6. In this process, the control module 101 determines the continuity of the detection positions of the target with respect to a plurality of pings continuing to the present point.

Specifically, the control module 101 determines whether or not the detection positions acquired from two pings that are temporally adjacent approach a given threshold value in the in-plane direction of the scanning cross-section (the first plane S1). Here, the threshold value is set to a limit value to which the detection position of a swimming fish is allowed to fluctuate between two pings. The control module 101 groups the two detection positions as originating from the same target if the two detection positions are closer than the threshold value. Thus, the control module 101 tracks the detection position of each target.

Next, at step S204, the control module 101 determines whether or not the tracked one or more fish has passed the detection region D2.

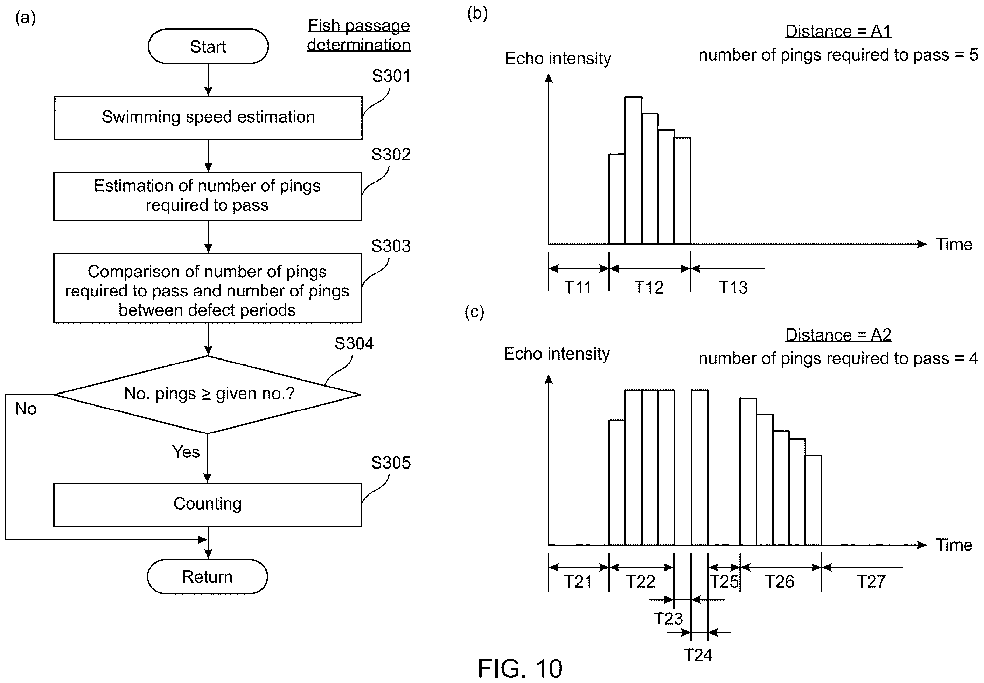

FIG. 10(a) is a flowchart illustrating the passage determination method in step S204 of FIG. 9(a), according to an embodiment. This processing is performed in the control module 101 by the function of the fish counting module 101a of FIG. 6.

First, at step S301, the control module 101 estimates a swimming speed of the target fish species from the fork length of the target fish species. The swimming speed of fish can be estimated from fork length (length of fish). The fork length used for estimation may be set by the user via, for example, the operation module 109 of FIG. 6. The fork length may also be calculated by the control module 101 from images from the underwater camera system 103. In this case, when needed, the control module 101 calculates the fork length of the fish of the target fish species from the images, and uses the calculated representative value of the fork length (average, median, mode, etc.) to estimate the swimming speed.

Next, at step S302, the control module 101 estimates a number of pings (hereinafter referred to as "number of pings required to pass ") required for the target fish species to pass the detection region D2 based on the estimated swimming speed.

If the user sets the fork length in step S301, the processes in steps S301 and S302 are performed only when the method of FIG. 10(a) is performed for the first time: the number of pings required to pass is calculated, and the calculated number of pings required to pass is stored in the storage module 102. In the second and subsequent processes, steps S301 and S302 are omitted, and the number of pings required to pass stored in the storage module 102 is referred to.

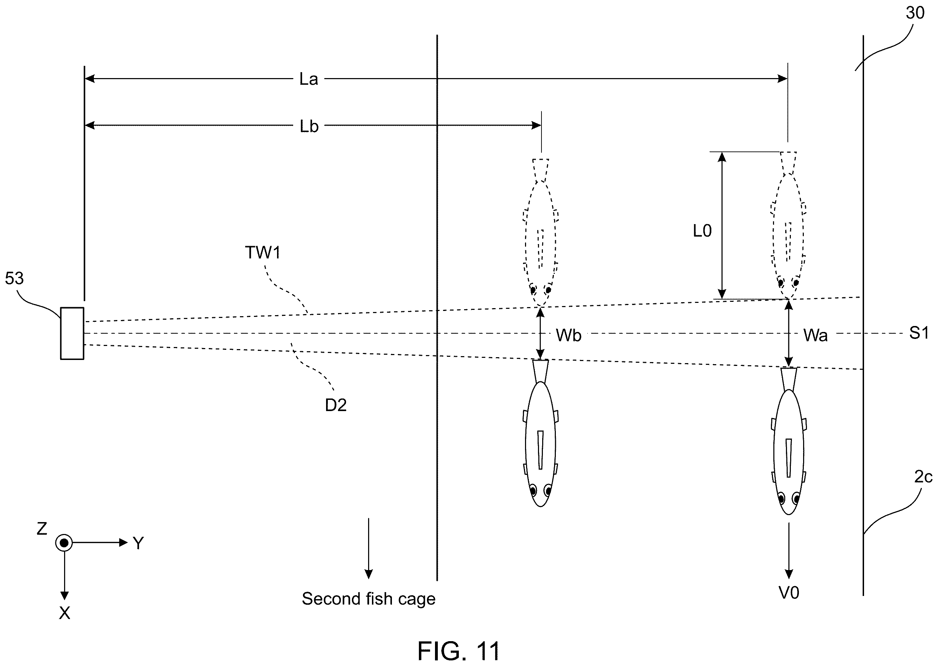

FIG. 11 is a diagram illustrating a method for estimating the number of pings required to pass.

As illustrated in FIG. 11, the first transmitted wave TW1 transmitted from the transducer 53 spreads in the X-axis direction according to the distance from the transducer 53. This spreading angle can be grasped in advance in the control module 101. Therefore, the relationship between the distance from the transducer 53 and the width of the first transmission wave TW1 in the X-axis direction can be grasped in advance in the control module 101. In the example of FIG. 11, the width of the first transmission wave TW1 at the distance La in the X-axis direction is Wa, and the width of the first transmission wave TW1 at the distance Lb in the X-axis direction is Wb.

Here, when the swimming speed (also referred to as "speed of the fish", so "swimming speed" and "speed" are interchangeably used to mean the same) of a fish is V0, the time required to pass each width of the first transmission wave TW1 can be calculated from the fork length L0 of the fish. In the example of FIG. 11, the time required to pass the first transmission wave TW1 is shorter for the fish swimming at the distance Lb than for the fish swimming at the distance La. As shown in FIG. 5(a), the range of the first transmission wave TW1 corresponds to the detection region D2. Therefore, the time required for the fish of the target fish species to pass through the detection region D2, that is, the number of pings required to pass, varies depending on the distance from the transducer 53.

Returning to FIG. 10(a), in step S302, as described above, the control module 101 estimates the relationship between the distance from the transducer 53 and the number of pings required to pass. That is, the control module 101 maps the number of pings required to pass to each position in the scanning cross-section (first plane) of the reception beams RB1.

Next, at step S303, for each target being tracked at step S203 of FIG. 9(a), the control module 101 compares the number of pings for which echo intensity has been generated and the number of pings required to pass. In this process, the control module 101 compares the number of pings during a period sandwiched between two defect periods in which no echo intensity occurs with the number of pings required to pass set at that target location.

At step S305, when the number of pings for which echo intensity has been generated is equal to or larger than the number of pings required to pass (S304: YES), the control module 101 estimates that the target is a fish of the target fish species, and performs counting based on the target. On the other hand, if the number of pings for which echo intensity has been generated is less than the number of pings required to pass (S304: NO), the control module 101 estimates that the target is a target other than the target fish species, such as a suspended particule, and does not perform counting based on the target.

FIGS. 10(b) and 10(c) are time charts schematically illustrating the echo intensity of a tracked target at each ping.

In FIGS. 10(b) and 10(c), one bar graph illustrates the echo intensity generated at one ping. In FIGS. 10(b) and 10(c), the distance from the transducer 53 to the target and the number of pings required to pass at that distance are added.

In the example of FIG. 10(b), period T12 between two defect periods T11 and T13 continuously includes 5 pings for which echo intensity has been generated. In this example, since the number of pings required to pass is 5, the determination at step S304 in FIG. 10(a) is YES. Thus, the counting based on the target is performed. Here, 1 is added to the count of the target fish species.

In the example of FIG. 10(c), between two defect periods T21 and T27 at both ends, short defect periods T23 and T25 are also included. This is due to the following reasons.

In the tracking process (S203) of FIG. 9(a), due to the effect of the correction process (S201) of FIG. 9(a) or the like, it happens sometimes that the echo intensity of the target is accidentally lost in a given ping. However, even in such a case, it is necessary to determine that continuity exists in the tracking process (S203) of FIG. 9(a). Therefore, in the tracking process (S203), if there is continuity in the detection positions of the target before and after the accidental defect period, these detection positions are tracked as the detection positions of the same target. Here, the period of the accidental loss is, for example, a period of 2 pings or less.

In the example of FIG. 10(c), the echo intensity when the target is tracked by such processing is shown. That is, in the pings before and after the short defect periods T23 and T25, there is continuity in the detection positions of the target, so that the target is tracked in the period between the defect periods T21 and T27 at both ends. In this example, the number of pings required to pass is 4. On the other hand, since the number of pings included between the defect periods T21 and T27 at both ends is 13 (defect period T23 has 1 ping and defect period T25 has 2 pings), the determination at step S304 in FIG. 10(a) is YES. Therefore, counting of the target fish species is executed.

However, in the example of FIG. 10(c), the defect periods T23, T25 included between the defect periods T21, T27 at both ends cause periods T22, T24, and T26 to be sandwiched between two defect periods. Of these, the number of pings included in the periods T22 and T26 is 4 and 5, respectively, and both are equal to or greater than the number of pings required to pass. In such a case, the control module 101 determines that 2 fish are included between the defect periods T21, T27 at both ends, and adds 2 fish for the count of the target fish species. That is, when 2 fish happen to pass continuously through the same position in the scanning cross-section (first plane S1) and the continuity is maintained by the echo intensity during the period T24 caused by noise or the like, the distribution of the echo intensity as shown in FIG. 10(c) can occur.

To cope with this, the control module 101 further divides the echo intensity group generated by the target tracking into periods between two adjacent defect periods, and specifies any of the divided periods as a passage period of the target fish species when the number of pings included in that divided period is equal to or greater than the number of pings required to pass. Then, the control module 101 adds the number of specified passage periods to the count of the target fish species. If the number of pings in any of the divided periods is not equal to or greater than the number of pings required to pass, the control module 101 adds 1 to the count of the target fish species if the number of pings (including the number of pings in defect periods) in the period sandwiched between the defect periods at both ends is equal to or greater than the number of pings required to pass. In the example of FIG. 10(c), since the periods T22 and T26 are specified as passage periods of the target fish species by the above processing, 2 is added to the count of the target fish species.

Returning to FIG. 9(a), at step S205, when the fish passage determination method (S204) is thus completed, the control module 101 adds the number of fish counted in the fish passage determination method to the fish count value of the target fish species. Thus, the control module 101 ends the fish counting method (S104) of FIG. 7.

Next, the processing of step S105 in FIG. 7 is described.

Fish to be transferred from the carrier ship 4 to the first fish cage 10 may include non-target fish species (yellowtail, bonito, etc.) in addition to target fish species (e.g., small tuna). In this case, most of the fish of the non-target fish species are similar in size and swimming speed to those of the target fish species because of condition of transfer from the carrier ship 4 and a size of the mesh of the net 2c. Therefore, in the counting process in step S104 using the echo data, fish of the non-target fish species and fish of the target fish species are counted as the target fish species. Therefore, at step S105 of FIG. 7, a process is performed in which the fish count value of the target fish species obtained at step S104 is made closer to the true count value of only the fish of the target fish species.

Specifically, the control module 101 calculates the ratio of the count value of the target fish species to the count value of all fish species from the count value of each fish species acquired from the images in step S103. The control module 101 then multiplies the fish count value obtained in step S104 by this ratio to adjust the fish count value. Thus, an adjusted fish count value closer to the true count value of only the fish of the target fish species can be obtained.

In step S103 of FIG. 7, it is not always necessary to obtain the count values of all the fish species, but only the count value of the target fish species may be obtained. In this case, the control module 101 acquires, from the images from the underwater camera system 103, a count value obtained by counting fish regardless of the fish species and a count value of the fish of the target fish species. Then, at step S105, the control module 101 calculates the ratio of the count value of the fish of the target fish species to the count value obtained by counting the fish irrespective of the fish species, and multiplies the calculated ratio by the fish count value obtained at step S104 to calculate the adjusted fish count value.

Next, the processing of step S106 in FIG. 7 is described.

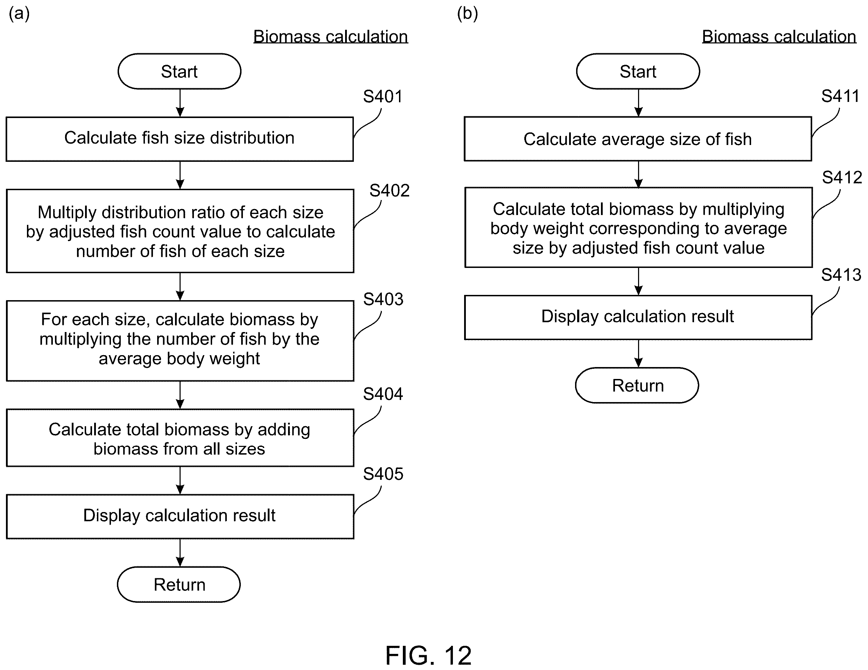

FIG. 12(a) is a flowchart illustrating the biomass calculation method performed at step S106 of FIG. 7.

The processing of step S401 is performed by the control module 101 using the function of the fish size calculating module 101c of FIG. 6, and the processing of steps S402 to S405 is performed by the control module 101 using the function of the fish biomass calculating module 101e of FIG. 6.

First, at step S401, the control module 101 calculates a distribution of sizes of fish based on the detection result of sizes of fish of the target fish species obtained at step S103 of FIG. 7. Specifically, the control module 101 calculates a number of detected fish in each of a plurality of size ranges of fish divided beforehand. Here, the size range is set, for example, by dividing a range from an upper limit to a lower limit expected for a fish of the target fish species into a plurality of ranges. The size range is, for example, a range of weight or a range of fork length. The size range may be segmented by the user via the operation module 109 of FIG. 6, or may be set by default.

Next, at step S402, the control module 101 calculates a ratio (distribution ratio) of fish in each size range to the total number of fish of the target fish species acquired at step S103 in FIG. 7, and multiplies the distribution ratio of each size range by the adjusted fish count value acquired at step S105 in FIG. 7 to calculate the number of fish in each size range.

Next, at step S403, the control module 101 calculates, for each size range, the average body weight of the fish from the fork length, and multiplies the calculated average body weight by the number of fish in each size range calculated in step S402 to calculate the biomass of the fish for each size range.

Then, at step S404, the control module 101 calculates the total biomass of the fish of the target fish species by adding the biomass in all the size ranges. The control module 101, at step S405, causes the display module 107 to display the calculated biomass of the fish of each size range and the total biomass together with the fish species, the number of fish of each size range, and the total number of fish of the fish species, and ends the process of FIG. 12(a).

FIG. 12(b) is a flowchart illustrating another example of the biomass calculation method performed at step S106 of FIG. 7, according to an embodiment.

At step S411, the control module 101 calculates an average size of the fish of the target fish species based on the detection result of the size of the fish of the target fish species obtained at step S103 of FIG. 7. Then, at step S412, the control module 101 calculates the total biomass of the target fish species by multiplying an average body weight in accordance with the calculated average size by the adjusted fish count value obtained at step S105 in FIG. 7. The control module 101 displays the calculated biomass together with the fish species and the total number of fish of the target fish species on the display module 107 (step S413), and ends the processing of FIG. 12(b).

The processing of step S411 is performed by the control module 101 using the function of the fish size calculating module 101c of FIG. 6, and the processing of steps S412 and S413 is performed by the control module 101 using the function of the fish biomass calculating module 101e of FIG. 6.

According to the method of FIG. 12(a), the user can confirm the biomass by size in addition to the total biomass of the target fish species. Thus, the user can smoothly take measures such as reporting the transfer amount of small fish of the target fish species to the public authority.

In the example of FIG. 12(a), the size range is set by dividing the range from the upper limit to the lower limit expected for the fish of the target fish species into a plurality of ranges, but only size range(s) that the user wants to specifically grasp may be set. In this case, the processing in steps S401 to S403 is performed for the set size range(s). That is, the distribution ratio of the number of fish in the set size range(s) is calculated, the distribution ratio is multiplied by the adjusted fish count value to calculate the number of fish in the set size range(s), and the calculated number of fish is multiplied by the average weight of the set size range(s) to calculate the biomass of fish in the set size range(s). At step S404, the processing of FIG. 12(b) may be performed to calculate the total biomass of the target fish species.

### <Effect of the First Embodiment>

According to the configuration of the first embodiment, the following effects can be obtained.

Since the one or more fish are detected and counted based on the first reception signal from the transducer 53 (ultrasonic transducer), not only a fish not included in the occlusion region of the detected one or more fish but also a fish included in the occlusion region of the detected one or more fish can be detected and counted. Therefore, the counting accuracy of the fish can be improved. Since the size of each fish of the one or more fish is calculated from the image acquired by the underwater camera system 103, the size of each fish can be accurately calculated with a simple configuration. Since the biomass of the fish is calculated based on the calculated sizes of the fish and the counting result of the one or more fish, the biomass of the fish can be accurately calculated.

As shown in FIG. 5(b), the control module 101 (fish counting module 101a) detects and counts fish based on multi-directional echo data (the first echo data) generated by the transmission/reception processing circuit 106 (beamforming module). Thus, the one or more fish can be detected in the direction of each reception beam RB1 formed by beamforming. Therefore, fish can be accurately detected and counted in the detection region D2 where the first transmission wave TW1 is transmitted.

In step S203 of FIG. 9(a), the control module 101 (fish tracking module 101b) tracks the detected one or more fish based on the first echo data acquired from the plurality of transmissions (pings). As shown in FIGS. 10(a) - 10(c), the control module 101 (fish counting module 101a) counts fish based on a number of transmissions (pings) for which they have been tracked. That is, the control module 101 (fish counting module 101a) counts the fish (S305) when the tracked fish of tracked one or more fish has been tracked for at least a given number of transmissions (the number of pings required to pass) (S304: YES). The given number of transmissions (the number of pings required to pass) is set according to the speed of the fish (S301, S302), and the speed of the fish is estimated based on the length of the fish. Thus, by counting the fish based on the number of transmissions (number of pings) for which the one or more fish is tracked, the fish of the target fish species can be counted with high accuracy. Further, since the number of transmissions (the number of pings required to pass) referred to is set based on the speed of the fish estimated from the length of the fish, the fish of the target fish species can be counted with high accuracy.

As shown in FIGS. 5(a) and 5(b), the plurality of directions (directions of the plurality of reception beams RB1) in which the first echo data is generated by the transmission/reception processing circuit 106 (the first beamforming module) is distributed within one plane (first plane S1). Thus, as shown in FIGS. 9(a) to 9(c), based on the first echo data, it is possible to detect that one or more fish have passed through the plane (first plane S1) and to detect the position where the one or more fish have passed. Thus, fish can be counted smoothly.

As shown in FIG. 6, the fish detection device 50 includes the fish species identification module 101d (trained processing module) which outputs the fish species of the one or more fish when an image including the one or more fish is inputted. In step S105 of FIG. 7, the control module 101 (fish size calculating module 101c) calculates the ratio of the target fish species in the one or more fish detected from the image, and the control module 101 (fish counting module 101a) adjusts the count of the fish based on the calculated ratio. Thus, by adjusting the fish count value by applying the ratio to the fish count value of the fish based on the first echo data, it is possible to obtain a fish count value of a target fish species in which influence of fish of other fish species similar in size to the target fish species is suppressed. Thus, the biomass can be calculated with higher accuracy using the fish count value of the target fish species, and the biomass with higher accuracy can be obtained.

Alternatively, at step S105 of FIG. 7, the control module 101 (fish size calculating module 101c) counts the number of fish of the target fish species among the one or more fish detected from the images, and the control module 101 (fish counting module 101a) adjusts the fish count value of fish based on the first echo data based on the counted number of fish of the target fish species. According to this configuration, even when the fish species identification module 101d (trained processing module) can only identify the target fish species, the counted value of the target fish species can be acquired from the images, and the ratio of the target fish species can be calculated from that counted value of the target species and the count value of the fish detected from the images regardless of the fish species. Thus, by applying this ratio to the fish count value based on the first echo data, the accuracy of the fish count value of the target fish species can be enhanced, and the biomass with higher accuracy can be obtained.

As shown in FIG. 12(a), the control module 101 (fish size calculating module 101c) calculates the distribution of the sizes of the fish (S401), and the control module 101 (fish biomass calculating module 101e) calculates the biomass of the fish based on the calculated distribution (S402, S403). Thus, the user can confirm the biomass of a desired size.

Alternatively, as shown in FIG. 12(b), the control module 101 (fish size calculating module 101c) calculates the average of the fish sizes (S411), and the control module 101 (fish biomass calculating module 101e) calculates the biomass of the fish based on the calculated average (S412) of the fish sizes. Thus, the user can confirm the total biomass of the detected one or more fish.

As shown in FIG. 4(a), the lenses 51a and 52a of the underwater camera system 103 and the transducer 53 of the underwater ultrasonic system 105 face substantially in the same direction. Thus, substantially the same position can be detected by the underwater camera system 103 and the underwater ultrasonic system 105. Therefore, the detection of the one or more fish by the images from the underwater camera system 103 and the detection of the one or more fish by the echo data from the underwater ultrasonic system 105 can be easily synchronized.

As shown in FIGS. 1-3, one or more fish migrate from the first fish cage 10 to the second fish cage 20 in the path 30, and the fish detection device 50 counts fish that migrate through the path 30. According to the fish cage system 1, the biomass of fish that moved from the first fish cage 10 to the second fish cage 20 can be accurately calculated.

### <Second Embodiment>

**In** the first embodiment, the detection unit 50b is provided with one transducer 53. On the other hand, in the second embodiment, the detection unit 50b is provided with a transducer 54 as a second ultrasonic transducer in addition to the transducer 53 (i.e., the first ultrasonic transducer).

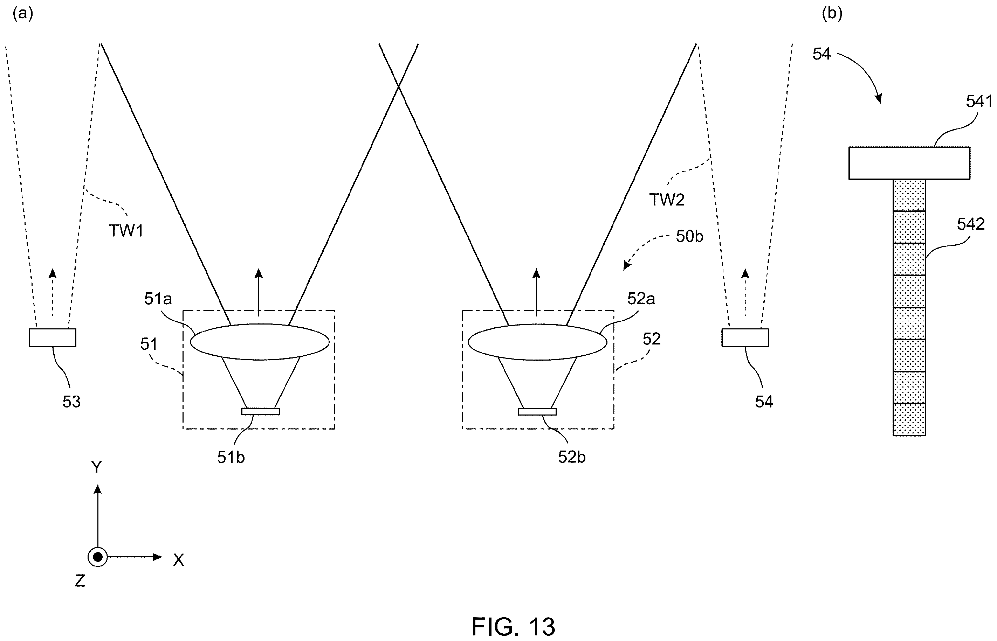

FIG. 13(a) is a diagram illustrating a configuration of the sensor unit of the detection unit 50b according to the second embodiment. FIG. 13(b) is a diagram illustrating a configuration of the transducer element disposed in the transducer 54, according to an embodiment.

Referring to FIG. 13(a), the detection unit 50b includes the transducer 53 (the first ultrasonic transducer) as well as the two cameras 51, 52 and the transducer 54 (the second ultrasonic transducer). The configuration and function of the cameras 51 and 52 and the transducer 53 are the same as those of the first embodiment. Similarly to the first embodiment, the two cameras 51 and 52 constitute a stereo camera. The configuration and function of the transducer 54 are the same as those of the transducer 53. As shown in FIG. 13(b), the transducer 54 includes a second transmission transducer element 541 (ultrasonic transducer) and a second plurality of reception transducer elements 542 (ultrasonic transducers). That is, the second plurality of reception transducer elements 542 are arranged in a second plurality of channels.

As shown in FIG. 13(a), the two transducers 53 and 54 are arranged to sandwich the two cameras 51 and 52 in the X-axis direction. The transducers 53 and 54 need not necessarily be arranged in this way, but may be arranged around the cameras 51 and 52, such as on the side of one camera.

The lenses 51a and 52a and the transducers 53 and 54 face substantially in the same direction. More specifically, the direction in which the lenses 51a and 52a and the transducers 53 and 54 are facing is the horizontal direction. As in the first embodiment, the direction in which the lenses 51a and 52a and the transducers 53 and 54 are facing is not necessarily the horizontal direction, and for example, the lenses 51a and 52a and the transducers 53 and 54 may be oriented downward from the horizontal direction.

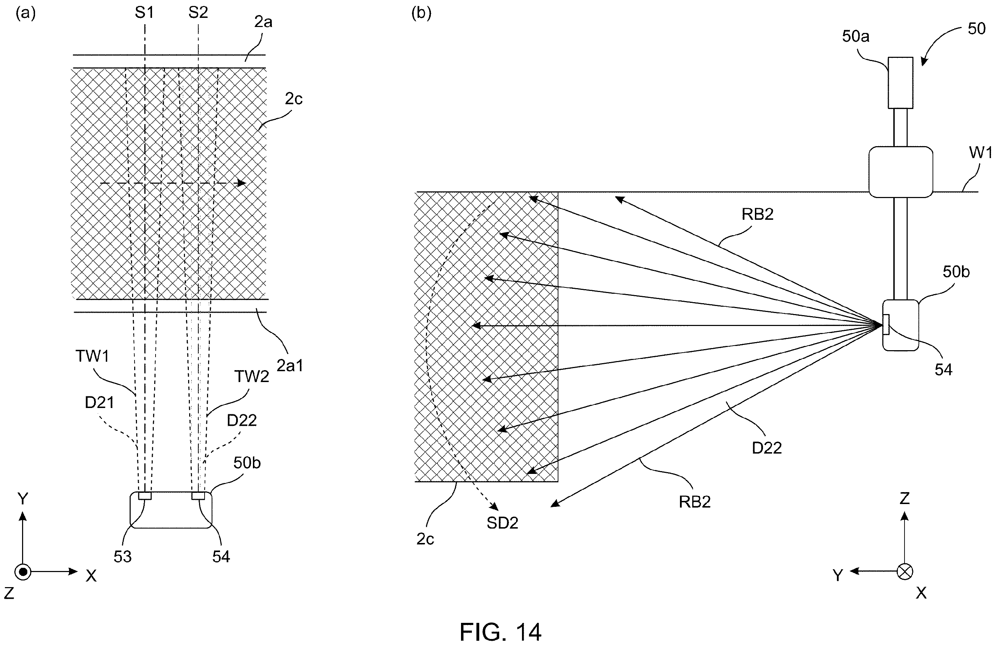

FIG. 14(a) is a partial top view schematically illustrating transmission states of the first transmission wave TW1 and a second transmission wave TW2, according to the second embodiment. FIG. 14(b) is a partial side view schematically illustrating a scanning state of reception beam RB2 according to the second embodiment.

For convenience, FIG. 14(b) illustrates the scanning state of the reception beams RB2 formed from the reception signals (second reception signals) of the transducer 54 (second ultrasonic transducer). The reception beams RB1 formed from the first reception signals of the transducer 53 are similar to FIG. 5(b).

As shown by broken lines in FIG. 14(a), the first transmission wave TW1 and the second transmission wave TW2 each having a narrow beam width in the X-axis direction and a wide beam width in the Y-Z plane are transmitted from the transmission transducer elements 531 and 541 of the transducers 53 and 54, respectively. As shown in FIG. 14(b), beamforming is performed from the second reception signals outputted from the second plurality of reception transducer elements 542 of the transducer 54, thus generating the plurality of reception beams RB2 having mutually different angles in the elevation angle direction.

The plurality of reception beams RB2 are directed in the elevation angle direction defined by a predetermined resolution, from a center of a row formed by the plurality of reception transducer elements 542. Each direction of the reception beams RB2 is within a second plane S2 parallel to the Y-Z plane. The second plane S2 extends along a straight line connecting the centers of the plurality of reception transducer elements 542, parallel to the Y-Z plane. As shown in FIG. 14(a), the second plane S2 passes through the middle of the width of the second transmission wave TW2 in the X-axis direction. The second plane S2 is scanned in a scanning direction SD2 along the elevation angle direction by the plurality of reception beams RB2. Thus, a target in the direction of each reception beam RB2 is detected. The second plane S2 is separated from the first plane S1 by a given distance in the positive X-axis direction.

In the second embodiment, the regions to which the transmission waves TW1 and TW2 are transmitted, that is, the two regions having narrow widths in the X-axis direction and wide widths in the Y-Z plane shown by the broken lines in FIG. 14(a), constitute the detection regions D21, and D22 respectively. In the second embodiment, the passage of one or more fish is detected in the detection regions D21, D22.

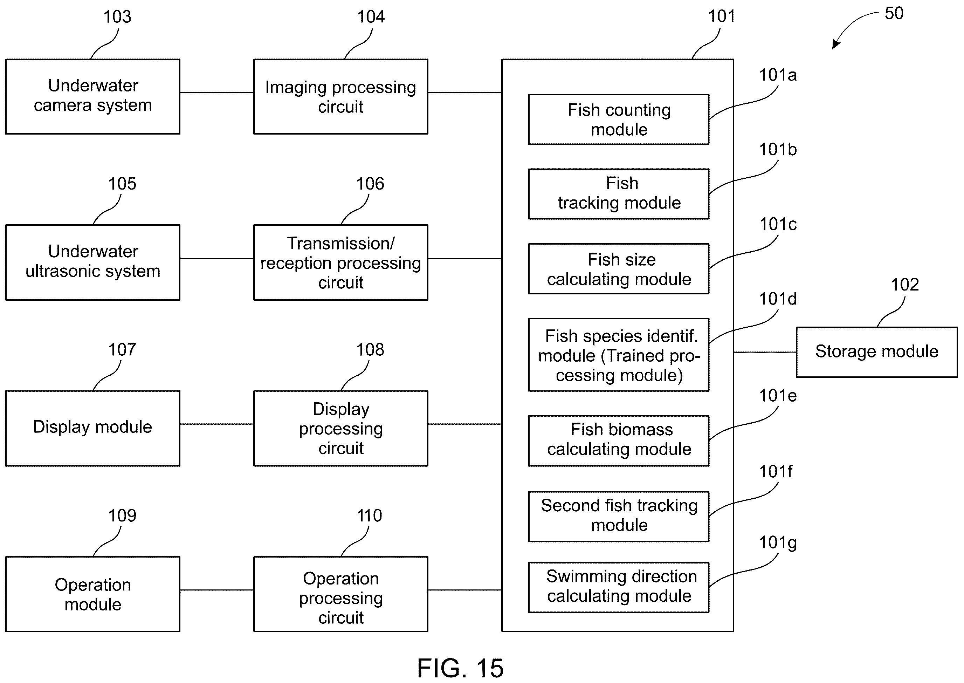

FIG. 15 is a block diagram illustrating a configuration of the fish detection device 50, according to the second embodiment.

The transmission/reception processing circuit 106 applies beamforming (using the first beam forming module) to the first reception signals inputted from the transducer 53 to generate the first echo data, as in the first embodiment. **In** addition, the transmission/reception processing circuit 106 includes a second beamforming module having a function of generating second echo data by applying beamforming to the second reception signals inputted from the transducer 54. That is, the transmission/reception processing circuit 106 performs beamforming from the second reception signal outputted from each reception transducer element 542 of the transducer 54 to form the plurality of reception beams RB2 distributed in the elevation angle direction as shown in FIG. 14(b), and generates the second echo data in the direction of each reception beam RB2.

In the second embodiment, the program stored in the storage module 102 provides a second fish tracking module 101f and a swimming direction calculating module 101g, wherein each of the modules is configured to perform different functions associated with the control module 101.

The second fish tracking module 101f performs a first fish detection of the fish in the first plane S1 based on the first echo data generated from the first reception signals outputted from the transducer 53, performs a second fish detection of the fish in the second plane S2 based on second echo data generated from the second reception signals outputted from the transducer 54, and performs tracking of the one or more fish based on the first fish detection and second fish detection.

The swimming direction calculating module 101g calculates a swimming direction of the fish tracked by the second fish tracking module 101f.

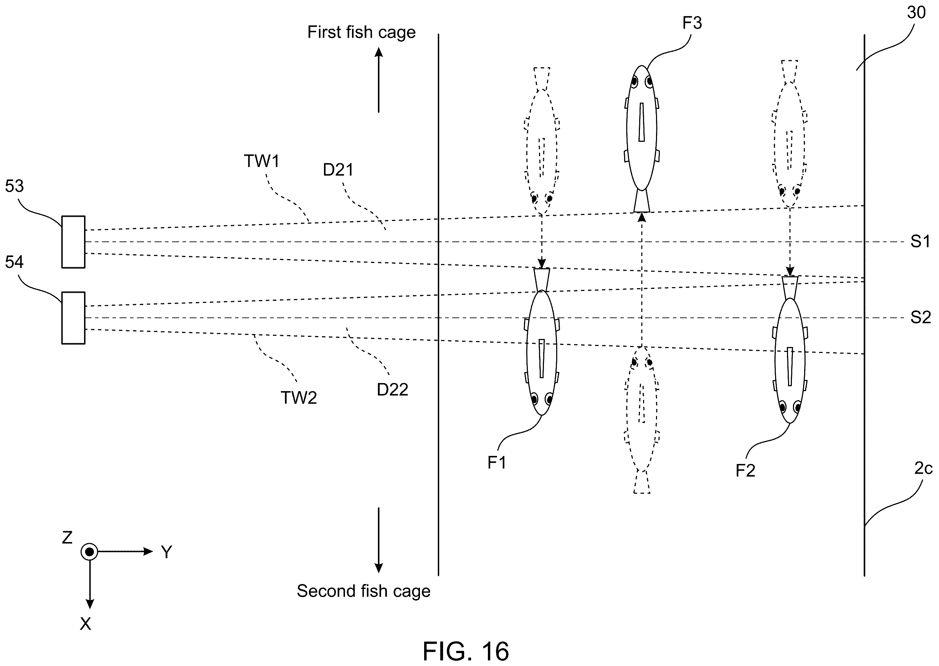

FIG. 16 is a diagram illustrating a method of tracking the fish in the second fish tracking module 101f and a method of calculating the swimming direction of the fish in the swimming direction calculating module 101g, according to an embodiment.

As shown in FIG. 16, fish swimming in the path 30 include fish F1 and F2 that head toward the second fish cage 20 and fish F3 that heads backward toward the first fish cage 10. The fish F1, F2 traveling to the second fish cage 20 traverse the detection region D21 and then the detection region D22. On the other hand, the fish F3 traveling back to the first fish cage 10 traverses the detection region D22 and then the detection region D21.

The second fish tracking module 101f estimates that a detection is based on the same fish when there is continuity between a detection position of a fish of the one or more fish in the first plane S1 and a detection position of a fish of the one or more fish in the second plane S2. Specifically, the second fish tracking module 101f compares the respective detection positions of the fish in the first plane S1 (detection region D21) and the second plane S2 (detection region D22) at any time, and when the detection positions approach a given threshold value or less in a direction parallel to the Y-Z plane and when there is temporal continuity in detection timings based on a relationship with the swimming speed of the fish, these detections are assumed to be detections based on the same fish, and a movement of the fish across the first plane S1 (detection D21) and the second plane S2 (detection region D22) is tracked.

A separation distance of the transducers 53 and 54 in the X-axis direction is set so as to enable the above tracking. For example, the transducers 53 and 54 may be disposed with a separation that prevents one transmission wave from affecting the other reception signal and allows the above tracking. For example, the separation distance of the transducers 53 and 54 is set so that the transmission waves TW1 and TW2 from the transducers 53 and 54, respectively do not overlap in the range of the path 30.

Alternatively, by shifting a transmission timing of the transducers 53 and 54, an influence of one transmission wave on the other reception signal may be suppressed. For example, transmissions from the transducers 53 and 54 may be alternately performed so that periods from start of transmission to end of reception of the transducers 53 and 54 do not overlap. In this case, the transducers 53 and 54 may be set such that regions of the transmission waves TW1 and TW2 partially overlap in the X-axis direction within the range of the path 30.

The fish detection ṁethod in the first plane S1 (detection region D21) and the second plane S2 (detection region D22) is the same as that in the first embodiment. The control module 101 similarly detects the one or more fish based on the second echo data in the second plane S2 (detection region D22) by the function of the fish counting module 101a. Based on this detection, the one or more fish is tracked by the second fish tracking module 101f described above.

The swimming direction calculating module 101g calculates the swimming direction of the one or more fish based on passage order of the one or more fish tracked by the second fish tracking module 101f as described above when the one or more fish pass through the first plane S1 (detection region D21) and the second plane S2 (detection region D22). More specifically, the swimming direction calculating module 101g estimates that, if the tracked one or more fish has passed through the first plane S1 (detection region D21) and then the second plane S2 (detection region D22), then the one or more fish swimming direction is toward the second fish cage 20. Also, the swimming direction calculating module 101g estimates that, if the tracked one or more fish has passed through the first plane S1 (detection region D21) after having passed through the second plane S2 (detection region D22), the direction in which the one or more fish swim is toward the first fish cage 10.

As shown in FIG. 16, when the fish F3 reverses in the direction of the first fish cage 10, it can be estimated that the fish F3 moved from the first fish cage 10 to the second fish cage 20 and then reversed from the second fish cage 20 to the first fish cage 10. Therefore, in this case, it is necessary to reduce the fish count value of the target fish species counted by the function of the fish counting module 101a in accordance with the detection of the reversal of the fish. Thus, the biomass of the fish of the target fish species transfered to the second fish cage 20 can be calculated more accurately.

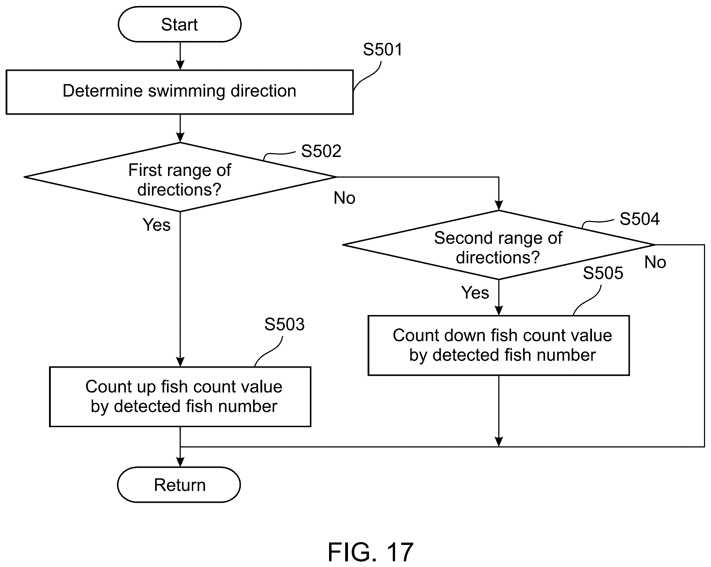

FIG. 17 is a flowchart illustrating a fish counting method according to the second embodiment.

The control module 101 performs this method by the functions of the fish counting module 101a, the second fish tracking module 101f, and the swimming direction calculating module 101g, according to an embodiment. This method is executed in step S205 of FIG. 9(a). The processes in steps S201 to S204 in FIG. 9(a) are performed in parallel for each of the detection regions D21 and D22.

At step S501, the control module 101 determines the swimming direction of the one or more fish detected based on the echo data (the first echo data or the second echo data) by the method described with reference to FIG. 16. Next, at step S502, the control module 101 determines whether or not the one or more fish has passed the detection regions D21, D22 while the swimming direction is included in the first range of directions toward the second fish cage 20.

If the determination at step S502 is YES, at step S503, the control module 101 counts up the fish count value for the target fish species by the number of fish detected by the process described with reference to FIGS. 10(b) and 10(c). On the other hand, if the determination at step S502 is NO, at step S504, the control module 101 determines whether or not the one or more fish has passed the detection regions D21, D22 while the swimming direction is included in the second range of directions toward the first fish cage 10.

If the determination at step S504 is YES, at step S505, the control module 101 counts down the fish count value for the target fish species by the number of fish detected by the process described with reference to FIGS. 10(b) and 10(c). On the other hand, if the determination at step S504 is NO, the control module 101 terminates the processing of FIG. 17 without changing the fish count value for the target fish species.

In this processing, the calculation of the number of fish by the processing of FIGS. 10(b) and 10(c), that is, the calculation of the detected number of fish used at steps S503 and S505 of FIG. 17 may be performed for any one of the detection regions D21 and D22. For example, this calculation may be performed only in the detection region D22 on the downstream side in the direction toward the second fish cage 20. Alternatively, if the fish has passed through in the first range of directions, the number of fish may be calculated in the downstream detection region D22, and if the fish has passed through in the second range of directions, the number of fish may be calculated in the upstream detection region D21.

### <Effect of Second Embodiment>

In the second embodiment, the same effect as in the first embodiment can be obtained.

In addition, according to the second embodiment, as shown in FIG. 17, depending on whether the swimming direction of the one or more fish that pass through the detection regions D21, D22 is included in the first range of directions or the second range of directions (S502, S504), the fish count value based on the echo data is increased or decreased (S503, S505). Thus, the fish remaining after moving in the first direction toward the second fish cage 20 can be accurately counted.

Also, as described with reference to FIG. 16, two transducers 53, 54 are disposed, with the control module 101 (second fish tracking module 101f) tracking fish based on detection of the one or more fish in the first plane S1 and the second plane S2 and the control module 101 (fish counting module 101a) counting fish based on fish tracking according to the method of FIG. 17. Thus, the counting of fish can be increased or decreased based on the moving direction of the one or more fish, and the fish remaining after moving in the first direction can be accurately counted.

### <Third Embodiment>

In the first and second embodiments, a two-dimensional sonar is used as the underwater ultrasonic system 105, but in the third embodiment, a three-dimensional sonar is used as the underwater ultrasonic system 105.

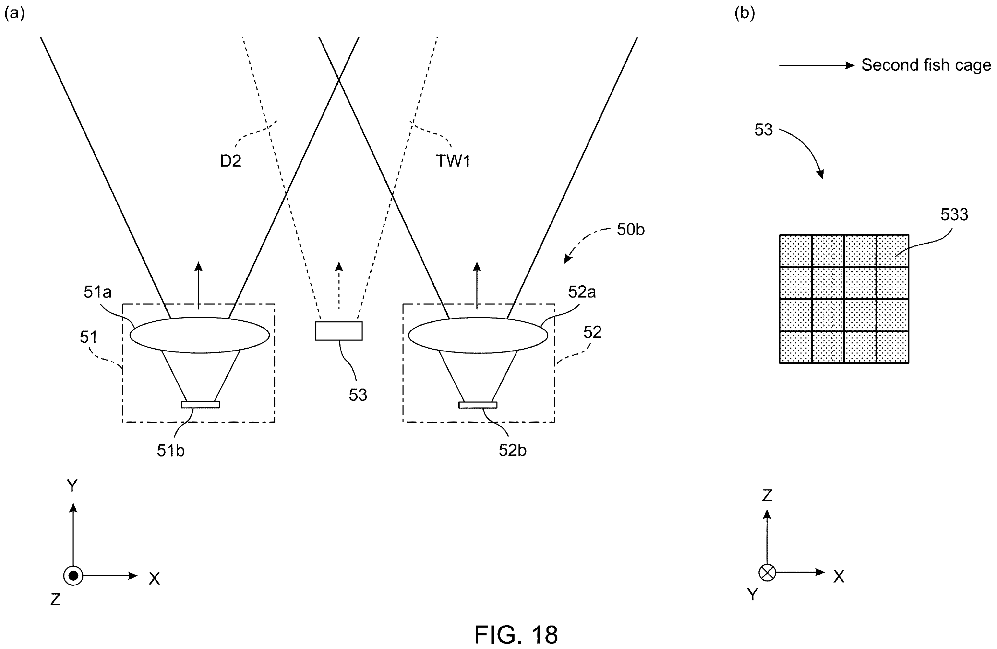

FIG. 18(a) is a diagram illustrating a configuration of the sensor unit of the detection unit 50b, according to the third embodiment. FIG. 18(b) is a diagram illustrating a configuration of the transducer element disposed in the transducer 53.

Referring to FIG. 18(a), the detection unit 50b has the same configuration as FIG. 4(a). Also in this configuration, the two cameras 51 and 52 constitute a stereo camera. The transducer 53 is disposed between the two cameras 51, 52. The transducer 53 needs not necessarily be arranged in this manner, but may be arranged around the cameras 51 and 52, such as on the side of one camera.

As shown in FIG. 18(b), the transducer 53 has a plurality of transducer elements 533 arranged in a plurality of channels. That is, the transducer 53 has a plurality of transducer elements 533 arranged in a matrix of 4 rows and 4 columns. The transducer elements 533 are used for transmission and reception. That is, the transducer elements 533 function as transmission transducer elements during transmission and as reception transducer elements during reception. The transducer elements 533 are ultrasonic transducers. The number of transducer elements 533 disposed in the transducer 53 is not limited to the number shown in FIG. 18(b).

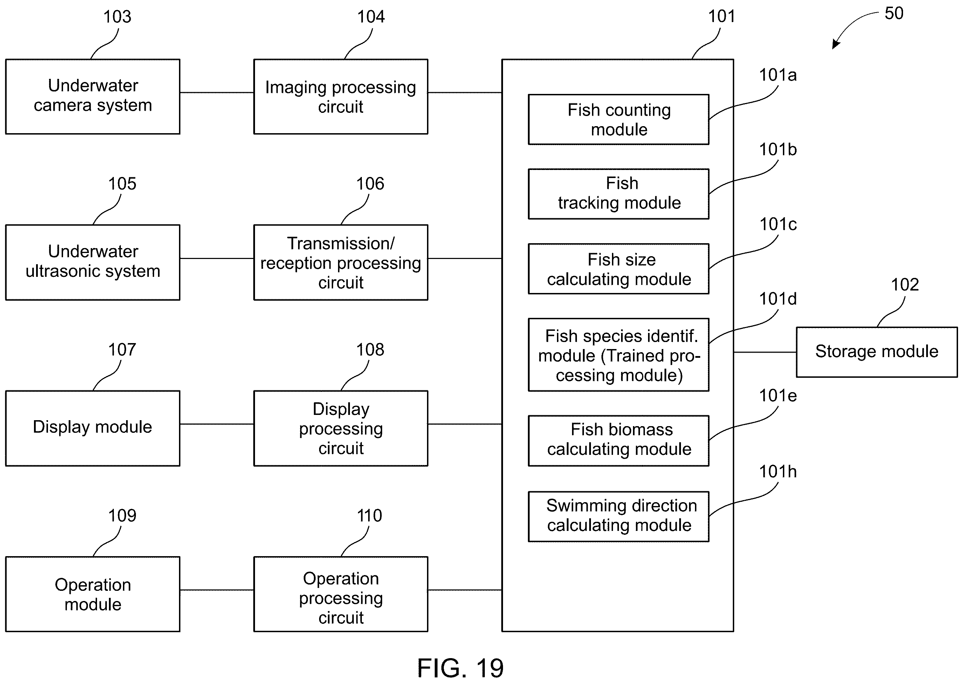

FIG. 19 is a block diagram illustrating a configuration of the fish detection device 50, according to the third embodiment.

At transmission, the transmission/reception processing circuit 106 drives given transducer element(s) among the transducer elements 533 to transmit a first transmission wave TW1 (ultrasonic wave). Thus, the first transmission wave TW1 (ultrasonic wave) is transmitted to the detection region D2. As shown in FIG. 18(a), the first transmission wave TW1 greatly expands not only in the Z-axis direction but also in the X-axis direction, and accordingly, the detection region D2 also expands in the X-axis direction.

At reception, the transmission/reception processing circuit 106 processes a first reception signals outputted from all the reception transducer elements 533. The transmission/reception processing circuit 106 performs beamforming from the first reception signal outputted from each reception transducer element to form a plurality of reception beams distributed in the horizontal angle direction and the elevation angle direction, and generates the first echo data in the direction of each reception beam. Thus, the transmission/reception processing circuit 106 generates the first echo data distributed in a three-dimensional manner in the detection region D2, and outputs the generated first echo data to the control module 101.

Therefore, in the third embodiment, the target (fish) included in the detection region D2 can be detected in a three-dimensional state with the resolution of each reception beam in the horizontal angle direction and the elevation angle direction and a given distance resolution.

In the third embodiment, the program stored in the storage module 102 provides a swimming direction calculating module 101h configured to perform different functions associated with the control module 101. In addition, the functions of the fish counting module 101a and the fish tracking module 101b are changed to functions for processing echo data distributed in a three-dimensional state.

That is, the control module 101 (fish counting module 101a) performs the same processing as in step S201 of FIG. 9(a) with respect to echo data for 1 ping distributed in a three-dimensional manner, and extracts echo data for target detection.

Next, the control module 101 executes the processing of step S202 of FIG. 9(a) with respect to the extracted first echo data. That is, the control module 101 (fish counting module 101a) extracts from the extracted first echo data a distribution region in which echo intensities higher than a given intensity are clustered together. Here, the distribution region extends in three dimensions. In addition, the control module 101 (fish counting module 101a) identifies a peak position of the echo intensity for each distribution region. When a plurality of peak positions exists in one distribution region, the control module 101 calculates a center of gravity position by merging the peak positions as the peak position of the region.

Then, the control module 101 (fish counting module 101a) calculates a distance between adjacent peak positions, and if the calculated distance is equal to or greater than a threshold value, it is estimated that the two adjacent distribution regions are caused by echoes from targets such as fish. On the other hand, if the distance between the peak positions is less than the threshold value, the control module 101 (fish counting module 101a) estimates that the distribution region having the smaller peak intensity is caused by reverberation or the like other than fish. In this case, the control module 101 (fish counting module 101a) deletes the peak position having the smaller peak intensity and acquires only the peak position having the larger peak intensity as the detection position of the target such as a fish.

Further, the control module 101 executes the processing of step S203 of FIG. 9(a) based on the detection position of the target. That is, the control module 101 (fish tracking module 101b) determines whether or not there is continuity of the detection positions of the targets in the three-dimensional directions between pings. Specifically, the control module 101 (fish tracking module 101b) determines that, when the three-dimensional positions of the target detected in temporally close pings approach each other within a threshold range, these detected positions are originating from the same target. In this case, the threshold range extends in three dimensions.

In this determination, as in the first embodiment, even if a target detected at a ping at a first timing is not detected at the next ping within the threshold range from the target position detected at the first timing, if the target detection position is included within the threshold range at, for example, a second timing after several pings (for example, less than or equal to 2 pings), the detection position at the second timing and the detection position at the first timing are determined to be originating from the same target.

Further, the control module 101 executes the processing of step S204 of FIG. 9(a) based on the target tracking. In this case as well, the control module 101 (fish counting module 101a) determines the passage of the fish by the same process as that shown in FIG. 10(a), and calculates the number of detected fish. In this case, the control module 101 (fish counting module 101a) calculates the number of pings required to pass based on the spreading angle of the detection region D2, the swimming speed and the sizes of the fish of the target fish species, and determines the passage of the fish of the target fish species and calculates the number of fish that have passed based on the calculated number of pings required to pass.

Further, the control module 101 (swimming direction calculating module 101h) calculates the moving direction (swimming direction) of the fish in the above-mentioned fish tracking process. That is, the control module 101 calculates in which direction the position of the fish detected in a series of pings is advancing with the passage of time, and acquires this direction as the swimming direction of the fish.

Then, the control module 101 executes the processing of step S205 of FIG. 9(a) based on the calculation of the swimming direction. This processing is similar to the processing of FIG. 17.

The control module 101 calculates the swimming direction of each fish of the one or more fish as described above (S501). The control module 101 counts up the fish count value for the target fish species by the detected fish number (S503) when fish pass the detection region D2 (S502: YES) while the swimming direction is included in a first range of directions toward the second fish cage 20. The control module 101 counts down the fish count value for the target fish species by the detected fish number (S505) when fish pass the detection region D2 (S504: YES) while the swimming direction is included in a second range of directions toward the first fish cage 10. The first range of directions is a range of directions including a vector component in a direction toward the second fish cage 20 (X-axis positive direction). The second range of directions is a range of directions including a vector component in a direction toward the first fish cage 10 (X-axis negative direction).

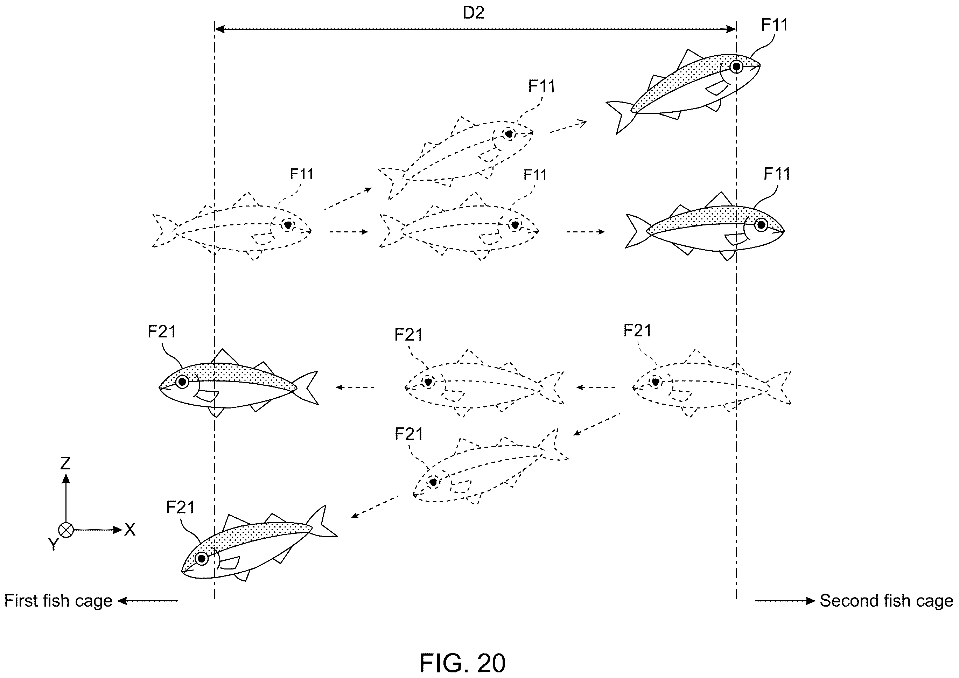

FIG. 20 is a diagram schematically illustrating an example of the fish counting method.

As shown in the upper part of FIG. 20, when the fish F11 passes the detection region D2 in the first range of directions toward the second fish cage 20, the fish count value of the target fish species is counted up by 1 count. In this case, not only when the fish F11 swims substantially parallel to the positive X-axis direction and passes the detection region D2 as shown in the lower side of the upper part of FIG. 20, but also when the fish F11 swims obliquely upward to the positive X-axis direction and passes the detection region D2 as shown in the upper side of the upper part of FIG. 20, the fish count value of the fish species of the fish F11 is incremented by 1.

On the other hand, as shown in the lower part of FIG. 20, when the fish F21 passes the detection region D2 in the second range of directions toward the first fish cage 10, the fish count value of the fish species of the fish F21 is counted down by 1 count. In this case, not only when the fish F21 swims substantially parallel to the X-axis negative direction and passes the detection region D2 as shown in the upper side of the lower part of FIG. 20, but also when the fish F21 swims obliquely downward to the X-axis negative direction and passes the detection region D2 as shown in the lower side of the lower part of FIG. 20, the fish count value of the fish species of the fish F21 is counted down by 1.

### <Effect of Third Embodiment>

In the third embodiment, the same effect as in the second embodiment can be obtained.

According to the third embodiment, since the directions of the plurality of reception beams RB1 for which the first echo data is generated by the transmission/reception processing circuit 106 (beamforming module) are distributed in a three-dimensional manner, a behavior of fish in the three-dimensional space can be detected from the first echo data. Therefore, even if the two transducers 53 and 54 are not arranged as in the second embodiment, the one or more fish can be detected and tracked, the swimming direction of the one or more fish can be calculated, and the processing of FIG. 17 can be executed.

### <Modifications>

The present invention is not limited to the above embodiments. The embodiments of the present invention can be modified in various ways other than the above configuration.

For example, in the above embodiments, the underwater camera system 103 includes a stereo camera, but the underwater camera system 103 may include only one camera. In this case, the distance to the one or more fish in the image acquired by the camera may be acquired by echo data (the first echo data or the second echo data) from the underwater ultrasonic system 105. For example, if the underwater ultrasonic system 105 includes the transducer 53 of the configuration of FIG. 18(b), a distance to the first fish detected by the reception beam in the direction corresponding to the fish position on the image may be acquired as the distance to the fish in the image.

Further, the contents of the processes in the functional units applied to the control unit 101 by the programs stored in the storage module 102 are not limited to the processes shown in the embodiments 1 to 3, and may be changed as appropriate.

For example, in the above-described embodiments 1 to 3, the method shown in FIGS. 10(b) and 10(c) is exemplified as a method for detecting the one or more fish based on echo data, but in this method, even if the number of pings in a period sandwiched between defect periods is equal to or greater than the number of pings required to pass, if this number of pings is not a number that can occur for the fish of the target fish species, it may be determined that the period is not a period in which the fish of the target fish species has passed the detection region D2. In this case, an upper limit threshold larger than the number of pings required to pass is provided, and when the number of pings in a period sandwiched between defect periods exceeds the upper limit threshold, no fish is counted even if the number of pings is equal to or larger than the number of pings required to pass.

Further, by inputting the echo intensity-ping pattern as illustrated in FIGS. 10(b) and 10(c) to a trained processing module, the number of fish of the target fish species that have passed the detection region D2 may be outputted. In this case, the trained processing module is previously trained with echo intensity-ping patterns of a given fish species. The training is based on Artificial Intelligence (AI). In addition, the method of calculating the ratio and the method of calculating the biomass are not limited to the methods described in FIGS. 12(a) and 12(b).

In the above embodiments, various functions are shown as the functions of the control module 101 provided by the program stored in the storage module 102, but these functions may not necessarily be realized as the functions provided by the program stored in the storage module 102. For example, one or more of these functions may comprise an FPGA (field-programmable gate array) or hardware integrated with a logic circuit.

The fish cage system 1 is not limited to the configuration shown in FIG. 1. Widths along the X-axis and Y-axis and depth along the Z-axis of the first fish cage 10, the second fish cage 20 and the path 30 may be varied as appropriate. The nets 2c and 3c do not necessarily have to hang in a rectangular shape but may hang in an arcuate shape. The path 30 needs not necessarily have an open upper surface but may have a cylindrical shape.

The fish detection device 50 may be used in a system other than the fish cage system 1. That is, the fish detection device 50 may be used in other situations to detect and count fish swimming in water.

Note that some of the processes described above, such as the process of step S105 of FIG. 7, may be applied as appropriate when detecting and counting fish using a reception transducer element having only a single channel transducer element.

In addition, the embodiments of the present invention can be appropriately varied in various ways within the scope of the claims.

As explained above and reiterated below, the present disclosure includes, without limitation, the following example implementations.

Clause 1. A fish detection device (50), comprising an underwater camera system (103) configured to acquire an image of one or more fish swimming underwater; a fish size calculating module (101c) configured to detect the one or more fish in the image, and calculate a fish size of each fish of the detected one or more fish based on the image comprising the detected one or more fish; a first ultrasonic transducer (53) configured to transmit a first transmission wave towards the one or more fish, receive a reflection wave of the first transmission wave reflected from the one or more fish, and generate first reception signal from the received reflection wave; a fish counting module (101a) configured to count fish as a fish count value based on the first reception signal; and a fish biomass calculating module (101e) configured to calculate fish biomass based on fish sizes of the detected one or more fish and the fish count value.

Clause 2. The fish detection device (50) of clause 1, wherein the first ultrasonic transducer (53) comprises a plurality of reception transducer elements arranged in a plurality of channels, each channel receiving the reflection wave and generating the first reception signal; the fish detection device (50) further comprising a first beamforming module (106) configured to generate first echo data in a plurality of directions by performing beamforming based on first reception signals generated respectively by the plurality of channels, wherein the fish counting module (101a) is configured to count the fish based on the first echo data.

Clause 3. The fish detection device (50) of clause 2, further comprising a first fish tracking module (101b) configured to track the detected one or more fish based on the first echo data acquired from a plurality of transmissions, wherein the fish counting module (101a) is configured to count fish based on a number of transmissions from the plurality of transmissions for which the detected one or more fish has been tracked.

Clause 4. The fish detection device (50) of clause 3, wherein the fish counting module (101a) is configured to count fish if a fish of the tracked one or more fish has been tracked for at least a given number of transmissions from the plurality of transmissions, the given number of transmissions being set according to a fish speed, and wherein the fish speed is estimated based on a fish length.

Clause 5. The fish detection device (50) of clause 3 or clause 4, further comprising a swimming direction calculating module (101g, 101h) configured to calculate a swimming direction of the tracked one or more fish, wherein the fish counting module (101a) is configured to increase or decrease the fish count value based on the swimming direction of the tracked one or more fish.

Clause 6. The fish detection device (50) of clause 5, wherein the fish counting module (101a) is configured to increase the fish count value when the swimming direction is within a first given range of directions, and decrease the fish count value when the swimming direction is within a second given range of directions, different from the first given range of directions.

Clause 7. The fish detection device (50) of any one of clauses 2 to 6, wherein the plurality of directions in which the first echo data is generated by the first beamforming module is distributed three dimensionally.

Clause 8. The fish detection device (50) of any one of clauses 2 to 6, further comprising a second ultrasonic transducer (54), separate from the first ultrasonic transducer (53), configured to transmit a second transmission wave towards the one or more fish, the second ultrasonic transducer (54) comprising a second plurality of reception transducer elements arranged in a second plurality of channels, wherein the second ultrasonic transducer (54) is further configured to receive a corresponding reflection wave of the second transmission wave reflected from the one or more fish, and generate a second reception signal from each of the second plurality of channels; and a second beamforming module (106) configured to generate second echo data in a second plurality of directions by performing beamforming based on the second reception signals generated by the second plurality of channels, wherein the plurality of directions in which the first echo data is generated by the first beamforming module is distributed within a first plane; and the second plurality of directions in which the second echo data is generated by the second beamforming module is distributed within a second plane; the fish detection device (50) further comprising a second fish tracking module (101f) configured to perform a first fish detection of the one or more fish in the first plane based on the first echo data, a second fish detection of the one or more fish in the second plane based on the second echo data, and a fish tracking of the one or more fish based on the first fish detection and the second fish detection, wherein the fish counting module (101a) counts fish based on the fish tracking.

Clause 9. The fish detection device (50) of any one of clauses 2 to 4, wherein the plurality of directions in which the first echo data is generated by the first beamforming module (106) is distributed within a plane.

Clause 10. The fish detection device (50) of any one of the clauses 1 to 9, further comprising a trained processing module (101d) configured to output a fish species of the one or more fish detected by the fish size calculating module (101c) when inputted with the image comprising the detected one or more fish, wherein the fish size calculating module (101c) is further configured to calculate a ratio of a target fish species in the one or more fish detected from the image; and the fish counting module (101a) is configured to adjust the fish count value based on the ratio.

Clause 11. The fish detection device (50) of any one of the clauses 1 to 9, further comprising a trained processing module (101d) configured to output a fish species of the one or more fish detected by the fish size calculating module (101c) when inputted with the image comprising the detected one or more fish, wherein the fish size calculating module (101c) is further configured to count a number of fish of a target fish species among the one or more fish detected from the image; and the fish counting module (101a) is configured to adjust the fish count value based on the number of fish of the target fish species.

Clause 12. The fish detection device (50) of any one of the clauses 1 to 11, wherein the fish size calculating module (101c) is further configured to calculate a distribution of fish sizes of a target fish species; and the fish biomass calculating module (101e) is further configured to calculate the fish biomass of the target fish species based on the distribution of the fish sizes of the target fish species.

Clause 13. The fish detection device (50) of any of the clauses 1 to 12, wherein a lens (51a, 52a) of the underwater camera system (103) and the first ultrasonic transducer (53) face substantially in a same direction, said same direction being the horizontal direction.

Clause 14. A fish cage system (1), comprising the fish detection device (50) of any of the clauses 1 to 13; and a path (30) connecting a first fish cage (10) and a second fish cage (20), wherein one or more fish migrate in the path (30) from the first fish cage (10) to the second fish cage (20); and the fish detection device (50) is configured to calculate fish biomass of the one or more fish migrating in the path (30).

Clause 15. A fish detection method, comprising acquiring an image of one or more fish swimming underwater; detecting the one or more fish in the image; calculating a fish size of each fish of the detected one or more fish based on the image comprising the detected one or more fish; transmitting a first transmission wave towards the one or more fish; receiving a reflection wave of the first transmission wave reflected from the one or more fish; generating a first reception signal based on the reflection wave; counting fish as a fish count value based on the first reception signal; and calculating fish biomass based on fish sizes of the detected one or more fish and the fish count value.

## Claims

1. A fish counting device (50), comprising:
a first ultrasonic transducer (53) comprising a plurality of reception transducer elements arranged in a plurality of channels, the first ultrasonic transducer (53) being configured to:
transmit a first transmission wave (TW1) towards one or more fish swimming underwater;
receive, by all channels of the first ultrasonic transducer, a reflection wave of the first transmission wave reflected from the one or more fish; and
generate, by all channels of the first ultrasonic transducer, a first reception signal from the received reflection wave;
a first beamforming module (106) configured to generate first echo data in a plurality of directions by performing beamforming based on first reception signals generated respectively by the plurality of channels;
a first fish tracking module (101b) configured to track detected one or more fish based on the first echo data acquired from a plurality of transmissions; and
a fish counting module (101a) configured to count fish as a fish count value based on the first echo data and based on a number of transmissions from the plurality of transmissions for which the detected one or more fish has been tracked;
**characterized in that** the fish counting module (101a) is configured to count fish if a fish of the tracked one or more fish has been tracked for at least a given number of transmissions from the plurality of transmissions, the given number of transmissions being set according to a distance (La, Lb) between the first ultrasonic transducer (53) and the fish, and a width of the first transmission wave (Wa, Wb) at said distance.

2. The fish counting device (50) of claim 1, wherein
the given number of transmissions is further set according to a fish speed, and wherein the fish speed is estimated based on a fish length.

3. The fish counting device (50) of claim 1 or claim 2, further comprising:
a swimming direction calculating module (101g, 101h) configured to calculate a swimming direction of the tracked one or more fish, wherein
the fish counting module (101a) is configured to increase or decrease the fish count value based on the swimming direction of the tracked one or more fish.

4. The fish counting device (50) of claim 3, wherein
the fish counting module (101a) is configured to:
increase the fish count value when the swimming direction is within a first given range of directions, and
decrease the fish count value when the swimming direction is within a second given range of directions, different from the first given range of directions.

5. The fish counting device (50) of any one of claims 1 to 4, wherein
the plurality of directions in which the first echo data is generated by the first beamforming module is distributed three dimensionally.

6. The fish counting device (50) of any one of claims 1 to 4, further comprising:
a second ultrasonic transducer (54), separate from the first ultrasonic transducer (53), configured to transmit a second transmission wave towards the one or more fish, the second ultrasonic transducer (54) comprising a second plurality of reception transducer elements arranged in a second plurality of channels, wherein the second ultrasonic transducer (54) is further configured to:
receive a corresponding reflection wave of the second transmission wave reflected from the one or more fish, and
generate a second reception signal from each of the second plurality of channels; and
a second beamforming module (106) configured to generate second echo data in a second plurality of directions by performing beamforming based on the second reception signals generated by the second plurality of channels, wherein
the plurality of directions in which the first echo data is generated by the first beamforming module is distributed within a first plane; and
the second plurality of directions in which the second echo data is generated by the second beamforming module is distributed within a second plane;
the fish counting device (50) further comprising:
a second fish tracking module (101f) configured to perform:
a first fish detection of the one or more fish in the first plane based on the first echo data,
a second fish detection of the one or more fish in the second plane based on the second echo data, and
a fish tracking of the one or more fish based on the first fish detection and the second fish detection, wherein
the fish counting module (101a) counts fish based on the fish tracking.

7. The fish counting device (50) of claim 1 or claim 2, wherein
the plurality of directions in which the first echo data is generated by the first beamforming module (106) is distributed within a plane.

8. The fish counting device (50) of any of the preceding claims, wherein the fish counting module (101a) is further configured to:
extract, from the first echo data, distribution regions, in each of which, echo intensities higher than a given intensity are clustered together;
identify a peak position of the echo intensity for each distribution region;
calculate a distance (DS0) between adjacent peak positions (PK1, PK2) of two adjacent distribution regions (DR1, DR2); and
if the distance (DS0) is smaller than a given threshold value, acquire the peak position (PK1) having a larger peak intensity than the other peak position (PK2) as a detection position of a fish.

9. The fish counting device (50) of any of the preceding claims, wherein the fish counting module (101a) is further configured to:
extract, from the first echo data, distribution regions, in each of which, echo intensities higher than a given intensity are clustered together;
identify a peak position of the echo intensity for each distribution region;
calculate a distance (DS0) between adjacent peak positions (PK1, PK2) of two adjacent distribution regions (DR1, DR2); and
if the distance (DS0) is greater than a given threshold value, estimate that the two adjacent distribution regions (DR1, DR2) are each caused by echoes from fish, and acquire the peak positions (PK1, PK2) of both of these distribution regions (DR1, DR2) as detection positions of fish.

10. A fish cage system (1), comprising:
the fish counting device (50) of any of the preceding claims; and
a path (30) connecting a first fish cage (10) and a second fish cage (20), wherein
one or more fish are to migrate in the path (30) from the first fish cage (10) to the second fish cage (20); and
the fish counting device (50) is configured to count fish migrating in the path (30).

11. A fish counting method, comprising:
transmitting, by a first ultrasonic transducer (53) comprising a plurality of reception transducer elements arranged in a plurality of channels, a first transmission wave (TW1) towards one or more fish swimming underwater;
receiving, by all channels of the first ultrasonic transducer, a reflection wave of the first transmission wave reflected from the one or more fish;
generating, by all channels of the first ultrasonic transducer, a first reception signal based on the reflection wave;
generating first echo data in a plurality of directions by performing beamforming based on first reception signals generated respectively by the plurality of channels;
tracking detected one or more fish based on the first echo data acquired from a plurality of transmissions; and
counting fish as a fish count value based on the first echo data and based on a number of transmissions from the plurality of transmissions for which the detected one or more fish has been tracked;
**characterized in that** fish is counted if a fish of the tracked one or more fish has been tracked for at least a given number of transmissions from the plurality of transmissions, the given number of transmissions being set according to a distance (La, Lb) between the first ultrasonic transducer (53) and the fish, and a width of the first transmission wave (Wa, Wb) at said distance.

12. The fish counting method of claim **11,** further comprising:
calculating a swimming direction of the tracked one or more fish; and
increasing or decreasing the fish count value based on the swimming direction of the tracked one or more fish.

13. The fish counting method of claim 12, further comprising:
increasing the fish count value when the swimming direction is within a first given range of directions; and
decreasing the fish count value when the swimming direction is within a second given range of directions, different from the first given range of directions.

14. The fish counting method of any one of claims 11 to 13, further comprising:
extracting, from the first echo data, distribution regions, in each of which, echo intensities higher than a given intensity are clustered together;
identifying a peak position of the echo intensity for each distribution region;
calculating a distance (DSO) between adjacent peak positions (PK1, PK2) of two adjacent distribution regions (DR1, DR2); and
if the distance (DSO) is smaller than a given threshold value, acquiring the peak position (PK1) having a larger peak intensity than the other peak position (PK2) as a detection position of a fish.

15. The fish counting method of any one of claims 11 to 14, further comprising:
extracting, from the first echo data, distribution regions, in each of which, echo intensities higher than a given intensity are clustered together;
identifying a peak position of the echo intensity for each distribution region;
calculating a distance (DSO) between adjacent peak positions (PK1, PK2) of two adjacent distribution regions (DR1, DR2); and
if the distance (DSO) is greater than a given threshold value, estimating that the two adjacent distribution regions (DR1, DR2) are each caused by echoes from fish, and acquiring the peak positions (PK1, PK2) of both of these distribution regions (DR1, DR2) as detection positions of fish.
